(19) Europäisches Patentamt / European Patent Office / Office européen des brevets

(11) **EP 4 281 363 B1**

## (12) EUROPÄISCHE PATENTSCHRIFT

(45) Veröffentlichungstag und Bekanntmachung des Hinweises auf die Patenterteilung:
**02.07.2025   Patentblatt 2025/27**

(21) Anmeldenummer: **22700454.6**

(22) Anmeldetag: **12.01.2022**

(51) Internationale Patentklassifikation (IPC):
**B64U 10/13** (2023.01)   **B64C 29/00** (2006.01)
**B64C 27/20** (2023.01)   **B64C 17/04** (2006.01)
**B64C 39/02** (2023.01)   **B64U 30/12** (2023.01)
**B64U 101/60** (2023.01)

(52) Gemeinsame Patentklassifikation (CPC):
**B64U 10/13; B64U 30/12;** B64C 17/04; B64C 27/20;
B64U 2101/60

(86) Internationale Anmeldenummer:
**PCT/DE2022/100019**

(87) Internationale Veröffentlichungsnummer:
**WO 2022/156854 (28.07.2022 Gazette 2022/30)**

(54) **FLUGEINHEIT FÜR EIN FLUGGERÄT**

FLIGHT MODULE FOR AN AIRCRAFT

MODULE DE VOL POUR AÉRONEF

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **20.01.2021   DE 102021101115
20.01.2021   DE 102021101116**

(43) Veröffentlichungstag der Anmeldung:
**29.11.2023   Patentblatt 2023/48**

(73) Patentinhaber: **GermaniumTech GmbH
01328 Dresden (DE)**

(72) Erfinder:
• **HUFENBACH, Werner
01324 Dresden (DE)**

• **WERNER, Jens
01640 Coswig (DE)**

(74) Vertreter: **Lippert Stachow Patentanwälte
Rechtsanwälte
Partnerschaft mbB
Krenkelstraße 3
01309 Dresden (DE)**

(56) Entgegenhaltungen:
**EP-A2- 1 209 076        EP-B1- 0 854 821
WO-A1-2019/221071     CN-A- 102 285 450
US-A1- 2017 057 630    US-A1- 2017 327 218
US-A1- 2018 002 026    US-A1- 2020 086 986**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Flugeinheit für ein senkrecht startendes und landendes Fluggerät, mit mehreren, an einer Tragwerksstruktur angeordneten Antriebseinheiten, wobei die Tragwerksstruktur miteinander verbundene Tragwerksbalken aufweist.

Aus der Druckschrift WO 2019/114885 A1 ist ein Flugmodul der vorstehenden Art für ein senkrecht startendes und landendes Fluggerät bekannt, welches eine Vielzahl von an Tragwerksbalken angeordnete Antriebseinheiten mit jeweils einem Propeller aufweist.

Aus der Druckschrift US 2020/086986 A1 ist gemäß Zusammenfassung ein unbemanntes Luftfahrzeug mit einem Ringflügel bekannt, bei dem einzelne Flügelabschnitte drehbar befestigt sind, und die um einen Rumpf herum angeordnet sind.

Das Flugmodul weist am äußeren Umfang der Tragwerksstruktur mehrere Luftleiteinrichtungen auf. Diese sind einseitig an äußeren Knotenpunkten der miteinander verbundenen Tragwerksbalken angeordnet und drehbar gelagert.

Das aus dem Stand der Technik bekannte Fluggerät kann neben dem Flugmodul ein beliebiges, an das Flugmodul koppelbares Transportmodul umfassen.

Während eines Start- bzw. Landevorgangs des Fluggerätes mit im Wesentlichen senkrechtem Steig- bzw. Sinkflug des Flugmoduls ist das Flugmodul im Wesentlichen waagerecht gegenüber dem Untergrund gerichtet (horizontale Fluglage).

Während des Reiseflugbetriebes des Fluggerätes mit einem im Wesentlichen horizontalen Vorwärtsfluges des Flugmoduls ist das Flugmodul im Wesentlichen geneigt gegenüber dem Untergrund gerichtet (geneigte Fluglage).

Nachteilig an der Lösung nach dem Stand der Technik ist zum einen, dass durch die Anordnung der Luftleiteinrichtungen am äußeren Umfang der Tragwerksstruktur das Flugmodul sehr ausladend gestaltet, was gerade beim Start- und Landevorgang störend ist, da unter den Start- bzw. Landebedingungen die Platzverhältnisse meist begrenzt sind und die Luftleiteinrichtungen daher während des Start- und Landevorgangs eingeklappt werden müssen und nicht mehr zur Luftleitung und Steuerung des Fluges des Flugmoduls einsetzbar sind.

Zum anderen erzeugt die einseitige Halterung und Lagerung der Luftleiteinrichtungen im Betrieb des Flugmoduls bzw. des Fluggeräts zudem eine erhebliche Biegebelastung der Luftleiteinrichtungen bzw. ihres Anschlusses an die Tragwerksstruktur und erzeugen eine ungünstige mechanische Belastung der Tragwerksstruktur.

Auch kann die Anzahl der betriebenen Propeller nicht an die in der jeweiligen Flugphase benötigte Antriebsleistung angepasst werden. So wird beispielsweise in der Phase des Vorwärtsfluges des geneigten Flugmoduls gegenüber der Phase des Steig- bzw. Sinkfluges des waagerecht orientierten Flugmoduls eine geringere Antriebsleistung benötigt, die es erlauben würde eine bestimmte Anzahl von Antriebseinheiten abzuschalten.

Allerdings bilden im Fall der geneigten Lage des Flugmoduls die Rotorblätter der Propeller von abgeschalteten Antriebseinheiten - trotz einstellbarem Neigungswinkel der Propeller und einstellbarem Anstellwinkel der Rotorblätter - durch die teilweise seitliche Anströmung einen ungünstigen Luftwiderstand, welche das optimale Strömungsbild und damit die Flugeigenschaften des Flugmoduls erheblich stören und daher auch in der geneigten Lage des Flugmoduls weiter betrieben werden müssen.

Hierdurch ist die Effizienz der betriebenen Antriebseinheiten (gerätetechnischer Aufwand im Verhältnis zur erbrachten Auftriebs- und Schubleistung) insbesondere in der Phase des horizontalen Vorwärtsfluges des geneigten Flugmoduls gemindert, so dass die erreichbare Reisefluggeschwindigkeit des Fluggerätes begrenzt bleibt.

Der Erfindung liegt die Aufgabe zugrunde, eine Flugeinheit mit höherer Effizienz hinsichtlich deren Gestaltung und deren Betrieb bei zugleich verbesserten Flugeigenschaften bereitzustellen.

Insbesondere soll der erforderliche Bauraum der Flugeinheit und die mechanische Belastung der Tragwerksstruktur verringert werden und gleichzeitig die Aerodynamik verbessert und die Flugstabilität in jeder Flugphase bzw. Fluglage gesichert werden.

Zur Lösung der Aufgabe ist erfindungsgemäß vorgesehen, dass eine bestimmte Anzahl von Tragwerksbalken jeweils mindestens einen Flügel mit einer Tragflächenform aufweist, welcher in einem Längenabschnitt (Flügel-Abschnitt) des zwischen zwei Knotenpunkten längserstreckten Tragwerkbalkens drehbeweglich angeordnet oder ausgebildet ist.

Der Flügel mit einer Tragflächenform, auch Tragfläche genannt, weist in Strömungsrichtung gesehen vorn vorzugsweise eine abgerundete Anströmkante zur Anströmung des Flügels durch den Luftstrom und in Strömungsrichtung gesehen hinten vorzugsweise eine spitz zulaufende Abströmkante zur Abströmung des Luftstromes vom Flügel auf.

Der Flügel weist an seiner Oberseite eine derart gewölbt geformte Anströmfläche im Verhältnis zur Anströmfläche seiner Unterseite auf, welche zur Erzeugung eines dynamischen Auftriebs im angeströmten Zustand des Flügels die Luftströmung über die Flügeloberseite umlenkt und beschleunigt und damit einen Unterdruck auf der Flügeloberseite und einen Überdruck auf der Flügelunterseite bewirkt.

Die Anströmfläche der Flügeloberseite ist vorzugsweise konvex geformt.

Die Anströmfläche der Flügelunterseite ist derart im Verhältnis zur Anströmfläche der Flügeloberfläche gewölbt geformt, dass zur Erzeugung des dynamischen Auftriebes die Beschleunigung der Luftströmung über die Anströmfläche der Flügeloberseite stets größer ist als über die Anströmfläche der Flügelunterseite.

Die Anströmfläche der Flügelunterseite kann konvex bis konkav geformte sein.

Der Flügel ist in einem bestimmten Längenabschnitt des längserstreckten Tragwerksbalkens angeordnet bzw. ausgebildet, der daher als Flügel-Abschnitt des Tragwerkbalkens bezeichnet wird.

Der Flügel bzw. der Flügel-Abschnitt des Tragwerkbalkens kann an wenigstens einen weiteren Längenabschnitt des zugehörigen Tragwerkbalkens angrenzen, der den Flügel hält und daher als Träger-Abschnitt bezeichnet wird.

Der Flügel bzw. der Flügel-Abschnitt kann sich auch vollständig zwischen zwei Knotenpunkten erstrecken.

Der Flügel-Abschnitt oder der Flügel-Abschnitt gemeinsam mit dem /den Träger-Abschnitt(e) übernehmen die notwendige Tragfunktion eines Tragwerkbalkens, welcher sich zwischen zwei Knotenpunkten der Tragwerkstruktur spannt, ebenso wie die Tragfunktion eines flügellosen Tragwerkbalkens.

Als Knotenpunkte der Tragwerkstruktur sind die Verbindungsstellen zwischen zwei Tragwerkbalken oder zwischen einem Tragwerkbalken und einem weiteren integralen Funktionsobjekt der Tragwerkstruktur, wie z.B. einer vorzugsweise zentral angeordneten Einheit u. a. zur Regelung und Steuerung der Flugeinheit (Zentraleinheit).

Die Zentraleinheit kann technische Funktionselemente, wie z. B. Steuerungs-, Lagebestimmungs- und/oder Kommunikationstechnik und/oder ein Lademodul und/oder technische Hilfsmittel zur Flugsicherung aufweisen.

Die Zentraleinheit kann bevorzugt mittig zu einer Mittelachse M der Flugeinheit angeordnet sein kann, so dass sich die Mittenachse der Zentraleinheit mit der Mittelachse M der Flugeinheit deckt. Die Zentraleinheit kann beispielsweise ein Gehäuse, z. B. in Form einer Halbkugel oder eines Ellipsoids, für die Aufnahme von technischen Funktionselementen aufweisen.

Die Tragwerksbalken der Tragwerksstruktur können mit einem Ende an dem oder in dem Gehäuse der Zentraleinheit befestigt sein und von der Zentraleinheit radial nach außen verlaufen.

Der Flügel weist zur Erzeugung des dynamischen Auftriebes eine Querschnittsfläche auf, die wesentlich größer ist, als die Querschnittsfläche des zugehörigen Tragwerkbalkens.

Flügel überragt mit seinem Querschnittsprofil damit deutlich das Querschnittsprofil des zugehörigen Tragwerkbalkens. Mit anderen Worten ist der Flügel in seiner quer gerichteten Erstreckung deutlich größer als der Tragwerkbalken in seiner quer gerichteten Erstreckung.

Der in dem Flügel-Abschnitt angeordnete bzw. ausgebildete Flügel ist zudem vorzugsweise in Richtung der Längserstreckung des Tragwerksbalkens längserstreckt angeordnet oder ausgebildet.

Der Tragwerksbalken kann im Bereich des Flügel-Abschnitts einen Flügel in vorbeschriebener Weise angeordnet haben oder selbst in vorbeschriebener Weise als Flügel ausgebildet sein.

Erfindungsgemäß ist der Flügel drehbeweglich angeordnet oder ausgebildet.

Mit dieser kombinierten Gestaltung der Tragwerksstruktur aus miteinander verbundenen Tragwerksbalken, welche jeweils alternativ oder zusätzlich zu den am Tragwerksbalken angeordneten Antriebseinheiten verstellbare Flügel aufweisen, die an den Tragwerksbalken drehbeweglich angeordnet oder ausgebildet sind, erfolgt zum einen eine bauraumeffiziente und strukturmechanisch günstige Integration von Flügeln innerhalb der Tragwerksstruktur und kann zum anderen der Betrieb der Flugeinheit in verschiedenen Fluglagen an die jeweils vorherrschenden Strömungsverhältnisse besser angepasst werden und damit die Aerodynamik der Flugeinheit wesentlich verbessert werden.

Die Erfindung geht bei dieser Lösung u. a. von der Erkenntnis aus, dass z. B. während des Vorwärtsfluges des Fluggerätes mit dem bekannten Flugmodul mit zunehmender Neigung des Flugmoduls durch die Antriebsleistung der Propeller eine zunehmende Vortriebswirkung bewirkt wird, aber ungünstiger Weise eine abnehmende Auftriebswirkung erzielt wird.

Die Erfindung geht weiter von der Erkenntnis aus, dass in einer Aufkipp-Phase bzw. einer Abkipp-Phase des bekannten Flugmoduls, bei dem es sich im Übergang aus dem senkrechtem Steigflug in den waagerechten Geradeaus- bzw. Vorwärtsflug bzw. im Übergang aus dem waagerechten Geradeaus- bzw. Vorwärtsflug in den senkrechten Sinkflug befindet, sich jeweils das Verhältnis des durch die Propeller erzeugten Vortriebsleistung und Auftriebsleistung umkehrt und die wechselseitige Beziehung aus Vor- und Auftrieb zu ungewünschten Effekten im Flugverhalten des Flugmoduls führen kann.

Die Erfindung geht weiter von der Erkenntnis aus, dass z. B. während des Steig- bzw. Sinkflugs des Fluggerätes mit dem bekannten Flugmodul die Auftriebswirkung der Propeller durch z.B. seitliche Windeinflüsse leicht gestört werden kann.

Ein besonderer aerodynamischer Vorteil der in die Tragstruktur integrierten Flügel liegt daran, dass diese auch von den Propellern der Antriebseinheiten zusätzlich angeströmt werden können, was bei den außen angeordneten Luftleiteinrichtungen des bekannten Flugmoduls nicht möglich ist.

Durch die Anströmung der in die Tragstruktur integrierten Flügel mit dem Abwind der Propeller, können diese Flügel auch für bestimmte Manöver beim Starten/Landen/Aufkipp/Abkippphase unter niedrigen Fluggeschwindigkeit der Flugeinheit wirksam genutzt werden, da sie auch während dieser Phasen durch die gesonderte zusätzliche Anströmung eine aerodynamische, das Flugmanöver unterstützende Kraft bewirken können.

Zur weiteren Verbesserung der Aerodynamik der erfindungsgemäßen Flugeinheit ist diese mittels der drehbaren Flügel so gestaltet, dass das Verhältnis der Auftriebsleistung zur Vortriebsleistung während des Vorwärtsfluges, des Steig- bzw. Sinkflug und in der Aufkipp-Phase bzw. Abkipp-Phase besser gesteuert und damit stabilisiert werden kann.

Die Drehbarkeit der Flügel ermöglicht, dass deren Lage entsprechend des Flugzustandes der Flugeinheit zur Stabilisierung oder Steuerung des Fluges eingestellt werden kann. So können sie wie Leitwerke eingesetzt werden und z.B. die Positionshaltung der Flugeinheit während bestimmter Manöver beim Starten/Landen/Aufkipp/Abkippphase unterstützen und verbessern.

So können die Flügel im senkrechten Steig- bzw. Sinkflug der Flugeinheit während des Start- und Landevorgangs des Fluggerätes bei Betrieb aller Antriebseinheiten mit im Wesentlichen vertikal gegenüber dem Untergrund ausgerichteten Anströmflächen eingestellt werden, so dass der durch die Propeller der Antriebseinheiten erzeugte Auftrieb in einer gegenüber dem Untergrund horizontalen Fluglage der Flugeinheit ungehindert wirken kann und nicht durch die Anströmflächen der Flügel behindert wird. Die Flügelstellung der durch die Propeller angeströmten Flügel kann zudem den senkrechten Auftrieb der Flugeinheit unterstützen und gegenüber seitliche Strömungseinflüsse stabilisieren. Die Flügel wirken dabei wie Seiten-Ruder und stellen einen Widerstand gegen seitliche Verschiebung senkrecht zur Anströmfläche der Flügel zur Verfügung.

Alternativ können die Flügel im senkrechten Steig- bzw. Sinkflug mit einem von der vertikalen Stellung abweichenden Stellwinkel gegenüber dem Untergrund angestellt sein, so dass sie auch im vertikalen Steig- bzw. Sinkflug eine Kraft ausüben, die zu einer vorbestimmten Seitwärtsbewegung oder Drehbewegung der Flugeinheit führt.

In einer Aufkipp-Phase, bei dem sich die Flugeinheit im Übergang aus dem senkrechtem Steigflug in den waagerechten Vorwärtsflug befindet, zum Realisieren des Reiseflug-Betriebes des Fluggerätes aus einer horizontalen Fluglage in eine gegenüber dem Untergrund geneigt gerichtete Fluglage aufgekippt wird, können die Flügel so geneigt / schräg gegenüber dem Untergrund orientiert gestellt werden, dass während des Betriebs einiger einzelner Antriebseinheiten die Anströmflächen der Flügel eine Umströmung erfahren und einen dynamischen Auftrieb erzeugen und damit das Aufkippen der Flugeinheit geführt unterstützen.

Analog können in einer Abkipp-Phase, bei dem die Flugeinheit im Übergang aus dem waagerechten Vorwärtsflug in den senkrechten Sinkflug aus einer nahezu vertikalen Fluglage in eine gegenüber dem Untergrund geneigt gerichtete Fluglage abgekippt wird, die Flügel so geneigt / schräg gegenüber dem Untergrund orientiert gestellt werden, dass während des Betriebs einiger einzelner Antriebseinheiten die Anströmflächen der Flügel eine Umströmung erfahren und einen dynamischen Auftrieb erzeugen und damit das Abkippen der Flugeinheit geführt verzögern.

Durch die zusätzlich angeströmten Flügel kann die Auftriebskomponente während der Aufkipp-Phase bzw. Abkipp-Phase stark beeinflusst werden und es ergibt sich mehr Spielraum für den Einsatz und den Betrieb der Antriebseinheiten.

Die vom Abwind der Propeller angeströmten Flügel können diesen Abwind der Propeller auch ablenken, wobei der entstehende Impuls zum Auftrieb während der Aufkipp-Phase bzw. Abkipp-Phase beitragen kann. Je schneller die Flugeinheit bzw. das Fluggerät fliegt, kann dies von der relativ strömenden Luft weiter erhöht werden.

Um z.B. das Aufkippen zu unterstützen, könnten beispielsweise die in Flugrichtung hinteren/oberen Flügel etwas mehr angestellt werden als die in Flugrichtung vorderen/unteren Flügel, um durch diese hinteren/oberen Flügel mehr Auftrieb als durch die in Flugrichtung vorderen/unteren Flügel zu erzeugen. Damit würde sich die Flugeinheit in Flugrichtung hinten nach oben bewegen, ohne dass dies durch einen höheren Schub der Propeller erfolgen muss.

Während des im Wesentlichen waagerechten Vorwärtsfluges der Flugeinheit zum Realisieren des Reiseflug-Betriebes des Fluggerätes, bei dem sich die Flugeinheit im Wesentlichen in einer gegenüber dem Untergrund steilen / nahezu vertikal gerichteten Fluglage befindet, können die Flügel so horizontal orientiert gegenüber dem Untergrund gestellt werden, dass während des Betriebs einiger einzelner Antriebseinheiten die Anströmflächen der Flügel eine Umströmung erfahren und einen dynamischen Auftrieb erzeugen und damit den Vorwärtsflug der Flugeinheit stabilisieren und die Flugleistung der Flugeinheit im Vorwärtsflug verbessern.

Bestenfalls werden bei einer nahezu vollständig vertikal gerichteten Fluglage der Flugeinheit während des waagerechten Vorwärtsfluges die Propeller der Antriebseinheiten fast ausschließlich für den Vortrieb genutzt und die Flügel übernehmen fast ausschließlich die Auftriebsleistung. Da die Propeller in dem Fall in Flugrichtung zeigen, werden die Flügel optimal angeströmt und arbeiten mit höchster Effizienz ihrer Auftriebleistung.

Das heißt folglich auch, dass mittels des unterstützen dynamischen Auftriebs der Flügel im Vorwärtsflug eine geringere Antriebsleistung durch die Antriebseinheiten benötigt wird und somit die Flugeinheit auch dadurch insgesamt kleiner hinsichtlich deren Größe und Masse konzipiert werden kann.

Folglich kann durch die höhere Effizienz der Flugeinheit Treibstoff gespart werden, respektive größere Flugstrecken bewältigt werden.

Die Drehverstellbarkeit der Flügel ist zudem vorteilhaft, um auftretende Störströmungen, wie Sturm oder Turbulenzen im Luftraum, durch entsprechende Flügelstellung ausgleichen zu können.

Für den Betrieb der Flugeinheit in Anpassung an die jeweiligen Strömungsverhältnisse in verschiedenen Fluglagen und Umweltsituationen ist die Drehverstellung der Flügel vorzugsweise einzeln und/oder gruppenweise ansteuerbar ausgebildet.

Der Längenabschnitt, welcher den Flügel aufweist (Flügel-Abschnitt), kann die gesamte Länge des längserstreckten Tragwerksbalken einnehmen oder nur einen Teil des längserstreckten Tragwerksbalken umfassen.

Erfindungsgemäß kann der Flügel sich also über die gesamte Länge des längserstreckten Tragwerksbalken erstrecken - also von Knotenpunkt zu Knotenpunkt der Tragwerksstruktur - oder einseitig oder beidseitig seiner Längserstreckung mit einem Längenabschnitt des Tragwerkbalkens (Träger-Abschnitt) verbunden sein.

Vorzugsweise, wie im letztgenannten Fall, ist der Flügel beidseitig von einem Träger-Abschnitt eingefasst ausgebildet oder angeordnet.

Hierdurch wird einerseits eine stabile Halterung des Flügels realisiert und andererseits eine bestimmte Beabstandung des Flügels zu den übrigen Tragwerksbalken der Tragwerksstruktur und zu den Antriebseinheiten bewirkt, welche u. a. größere Freiheitsgrade für den Schwenkbereich des Flügels ermöglicht und geringere wechselseitige Strömungsbeeinflussung zwischen den Propellern und den Flügeln bedeutet.

Vorteilhafter Weise ist der am Flügel-Abschnitt angeordnete oder ausgebildete Flügel um eine Längsachse des Tragwerksbalkens drehbeweglich gestaltet.

Diesbezüglich kann ein im Flügel-Abschnitt des Tragwerksbalkens angeordneter oder ausgebildeter Flügel gegenüber dem Flügel-Abschnitt und / oder gegenüber dem /den sich anschließenden Träger-Abschnitt(en) des Tragwerksbalkens um dessen / deren Längsachse drehbar ausgebildet oder angeordnet sein.

Ebenso kann auch der Flügel-Abschnitt und / oder der /die sich anschließenden Träger-Abschnitte des Tragwerksbalkens gegenüber dem/den feststehenden Knotenpunkten der Tragwerksstruktur und / oder gegenüber einem feststehenden Träger-Abschnitt des Tragwerksbalkens um dessen Längsachse drehbar ausgebildet oder angeordnet sein.

Diese Ausführungen ermöglicht eine besonders raum- und massensparende Anordnung und Funktionsweise der Flügel entlang des Tragwerksbalkens der Tragwerksstruktur.

Auch die Ausführung, bei der der Flügel den Flügel-Abschnitt des Tragwerksbalkens umschließend angeordnet oder ausgebildet ist, realisiert eine besonders raum- und massensparende Anordnung und Funktionsweise der Flügel an der Tragwerksstruktur.

Die Umschließung des Tragwerkbalkens durch den Flügel hat weiterhin den Vorteil, dass sowohl die Tragwerksstruktur als auch die Flügel jeweils einzeln nach ihren spezifischen Lastanforderungen dimensioniert werden können und somit die Tragwirkung der Tragwerksstruktur nicht nachteilig von dem Flügel beeinflusst wird.

Zudem ist die Lagerung des Flügels und die Lasteinleitung in die Tragwerkstruktur konstruktiv einfachen, da im Betrieb weniger Biegelastanteile auftreten und die Krafteinleitung linear verteilt entlang des Flügels erfolgen kann, statt nur an den Endpunkten, wie bei den Luftleiteinrichtungen nach dem Stand der Technik.

In einer speziellen Ausführungsform ist der Flügel drehbar gegenüber dem/den angrenzenden Träger-Abschnitt(en) angeordnet oder ausgebildet.

Bei dieser Ausführung können beispielsweise Drehlager zur Drehstellung des Flügels unmittelbar an oder in den beiden Enden des längserstreckten Flügels angeordnet sein, so dass der Flügel bzw. der Flügel-Abschnitt mit dem fest verbundenen Flügel gegenüber dem / den angrenzenden, drehfest /starr ausgebildeten Träger-Abschnitt(en) drehverstellt werden kann.

Diese Ausführung bietet die konstruktiv einfachste Herstellung und Ausführung der Verstellmöglichkeit der Neigung des Flügels gegenüber dem Tragwerksbalken.

Die Anordnung der Drehlager unmittelbar an oder in den beiden Enden des Flügels schafft eine stabile Lagerung des Flügels und ermöglicht einen problemlosen Austausch des Flügels für beispielsweise einen einsatzspezifischen Profilwechsel.

Die durch die Anströmung des Flügels entstehende Biegebelastung der Träger-Abschnitte kann durch entsprechende Gestaltung der Drehlager kompensiert werden. So können beispielsweise Tonnenrollenlager eingesetzt werden, die eine gewisse Winkelstellung der Lagerelemente zueinander zulassen, so dass damit das Drehlager gleichzeitig als Winkelentkopplung fungiert.

In einer alternativen Ausführungsform ist der Träger-Abschnitt drehbar gegenüber einem anderen Träger-Abschnitt desselben Tragwerkbalkens und /oder gegenüber einem dem Tragwerksbalken zugehörigen Knotenpunkt der Tragwerksstruktur angeordnet oder ausgebildet.

Anders ausgedrückt kann ein Teil eines Tragwerkbalkens oder eines Träger-Abschnitts drehbar gegenüber einem anderen Teil desselben Tragwerkbalkens oder desselben Träger-Abschnitts und /oder drehbar gegenüber einem dem Tragwerksbalken zugehörigen Knotenpunkt angeordnet oder ausgebildet sein.

Bei dieser Ausführung können der /die angrenzenden Tragwerksbalken-Abschnitt(e) oder ein Teil des /der angrenzenden Tragwerksbalken-Abschnitt(e) fest mit dem am Flügel-Abschnitt angeordneten oder ausgebildeten Flügel verbunden sein und beispielweise an dessen gegenüberliegenden Ende im Übergang zu dem drehfest ausgebildeten Träger-Abschnitt (anderen Teil des Träger-Abschnitts) des desselben Tragwerksbalkens und / oder im Übergang zu einem Knotenpunkt des Tragwerksbalkens der Tragwerksstruktur Drehlager zur Drehstellung des Flügels angeordnet sein, so dass der Flügel im Flügel-Abschnitt gemeinsam mit dem angrenzenden Träger-Abschnitt (Teil des Träger-Abschnitts) gegenüber dem drehfest ausgebildeten Träger-Abschnitt (anderen Teil des Träger-Abschnitts) oder gegenüber dem Knotenpunkt der Tragwerksstruktur drehverstellt werden kann.

Die an den Flügel angrenzenden, fest mit diesem verbundenen Träger-Abschnitte stellen somit den Flügel einfassende und stützende drehbare Wellen dar.

Diese Anordnung erzeugt eine geringere Biegebelastung innerhalb der einzelnen Träger-Abschnitte, weil die Biegebelastung durch die Anströmung der Flügel gleichermaßen / verteilt auf die Flügel und auf die mit diesen fest verbundenen Träger-Abschnitte wirkt.

Die durch die Anströmung des Flügels entstehende Biegelast vollführt in den mit dem drehbaren Flügel verbundenen Träger-Abschnitt(en) eine Winkeländerung gegenüber den drehfest ausgebildeten Träger-Abschnitt(en) oder gegenüber dem / den zugehörigen Knotenpunkt(en) der Tragwerksstruktur, welche durch entsprechende Gestaltung der externen Drehlager kompensiert werden. So können beispielsweise Tonnenrollenlager, die eine gewisse Winkelstellung der Lagerelemente zueinander zulassen, gleichzeitig als Winkelentkopplung fungieren.

Die Tragwerksstruktur wird hiermit deutlich von der Biegebelastung entlastet, was zu einer Verbesserung der Stabilität der Tragwerksstruktur und der Flugeigenschaften der Flugeinheit führt.

Sind die Drehlager vorteilhafter Weise in Nähe der zugehörigen Knotenpunkte des Tragwerksbalkens der Tragwerksstruktur angeordnet, wird die Biegebelastung des Tragwerkbalkens und damit der Tragwerksstruktur weiter gemindert.

In einer weiteren vorteilhaften Ausführungsform ist der Flügel drehbar gegenüber dem Flügel-Abschnitt angeordnet oder ausgebildet.

Bei dieser Ausführung kann das oder die Drehlager zur Drehverstellung des Flügels an dem Flügelkörper oder in dem Flügelkörper integriert angeordnet oder ausgebildet sein, so dass der Flügel gegenüber dem drehfest ausgebildeten Flügel-Abschnitt und Träger-Abschnitt(en) des Tragwerkbalkens drehverstellt werden kann.

Die drehbewegliche Verbindung zwischen dem Flügel und dem Tragwerkbalken im Flügel-Abschnitt kann durch ein einziges Drehlager realisiert werden.

Der Tragwerksbalken, welcher einen angeordneten Flügel trägt, ist damit im Gegensatz zu den vorstehend genannten Ausführungen durchgehend / ununterbrochen mit im Wesentlichen identischem Querschnitt ausgebildet und bildet eine starre Drehachse für die Drehverstellung des Flügels.

Der Flügel kann entlang seiner Längserstreckung eine Durchführung zur Aufnahme des durchgehend ausgebildeten Tragwerkbalkens und zur Aufnahme des /der integrierten Drehlager(s) aufweisen.

Bei dieser Ausführung wird die durch die Anströmung des Flügels entstehende Biegelast - insbesondere bei der Verwendung mehrerer über die Länge des Flügel-Abschnitts verteilt angeordneter Drehlager - gleichmäßiger über eine große Länge des durchgehenden Tragwerkbalkens verteilt aufgenommen und somit eine Durchbiegung des Tragwerkbalkens weitestgehend vermindert, so dass auch hier die Stabilität der Tragwerksstruktur erhöht und die Flugeigenschaften der Flugeinheit verbessert wird.

Infolgedessen treten weitestgehend keine Winkelabweichungen im Bereich der Drehlager auf, so dass bei dieser Ausführung außerdem konstruktiv einfachere Drehlager, wie Kugellager oder Gleitlager, anwendbar sind.

Vorteilhafter Weise ist ein Anstellwinkel β des /der Flügel(s) in einem Winkelbereich von 0° bis 270° verstellbar ausgebildet.

Die Drehstellung der Flügel können zumindest teilweise einstellbar ausgebildet sein, insbesondere mit einem Anstellwinkel β, der zwischen einer definierten von der Tragwerkstruktur der Flugeinheit gebildeten Tragwerksebene E und einer mittleren Querschnittsebene des Flügels eingeschlossen wird. Die Flügel können mit einem Anstellwinkel β in einem Bereich von 0° bis 270° ausrichtbar sein, so dass ihre Auftriebs- bzw. Lenkfunktion während des Flugbetriebes in jeder Flugphase und Fluglage der Flugeinheit optimal an die Strömungsverhältnisse, Umweltbedingungen etc. angepasst werden kann.

Durch die Variation des Anstellwinkels β kann eine optimale Umströmung und Auftriebsleistung des /der Flügel in jeder beliebigen Fluglage erzeugt werden und beispielsweise die Auftriebsfunktion des Flugeinheit entsprechend der Strömungsverhältnisse vorteilhaft beeinflusst werden.

Werden mehrere Flügel mit jeweils verschieden großen Anstellwinkeln ß ausgerichtet, kann beispielsweise die Lenk- und Lagestabilisierungs-Funktion der Flugeinheit verbessert werden.

Als Anstellwinkel β ist jeweils der größere der sich bildenden Winkel zwischen der Tragwerksebene E und der mittleren Querschnittsebene des Flügels im Bereich des hinteren, im Normalfall entgegen der Flugrichtung weisenden, die spitz zulaufende Abströmkante aufweisenden Flügel-Abschnitts des Flügels bestimmt.

Bei mehreren verstellbar ausgebildeten Flügeln können die jeweiligen Anstellwinkel β der Flügel unabhängig voneinander variierbar sein und die Anstellwinkel ß der Flügel individuell ansteuerbar sein.

Bei einem Anstellwinkel β von 180° ist die Tragwerksebene E und die mittlere Querschnittsebene des Flügels deckungsgleich.

Diese Stellung des Flügels / der Flügel (nicht dargestellt) kann beispielsweise in einer notwendigen Abbremssituation (z.B. bei ungünstigen Auf- oder Abwinden) während der Steig- bzw. Sinkflugphase der Flugeinheit angewandt werden.

Bei einem Anstellwinkel ß von 90° ist der vordere, die abgerundete Anströmkante aufweisende Flügel-Abschnitt des Flügels steil nach oben gerichtet und der hintere, die spitz zulaufende Abströmkante aufweisende Flügel-Abschnitt steil nach unten gerichtet.

Diese Stellung des Flügels/ der Flügel können Z.B vorrangig während der Steig- bzw. Sinkflugphase der Flugeinheit angewandt werden, um zum Beispiel den durch die Propeller in der Steig- bzw. Sinkflugphase erzeugten Auftrieb oder Abtrieb der Flugeinheit zu unterstützen und die Fluglage der Flugeinheit während der Steig- bzw. Sinkflugphase bei beispielsweise ungünstigen Seitenwinden zu stabilisieren.

Bei einem Anstellwinkel ß von 270° (nicht dargestellt) ist der vordere, die abgerundete Anströmkante aufweisende Flügel-Abschnitt des Flügels steil nach unten gerichtet und der hintere, die spitz zulaufende Abströmkante aufweisende Flügel-Abschnitt steil nach oben gerichtet.

Diese Stellung einzelner Flügel mit einem Winkel ß von bis zu 270° kann beispielsweise in der Situation während der Aufkipp-Phase bzw. der Abkipp-Phase der Flugeinheit angewandt werden, um einerseits das Aufkippen oder Abkippen der Flugeinheit zu unterstützen und ggf. zu beschleunigen und um andererseits die Flugeinheit in dieser, gegenüber dem Untergrund geneigt gerichtete Fluglage zu lenken und zu stabilisierten.

Die Stellung des/der Flügel(s) mit einem Winkel ß in einem Bereich von etwa 70° bis etwa 110° entspricht vorrangig im Wesentlichen der Situation während des Geradeaus- oder Vorwärtsfluges der Flugeinheit, um eine optimale Umströmung und entsprechende Auftriebsleistung des /der Flügel für den Vorwärtsflug zu erzeugen und die Flugeinheit in ihrer angestrebten Fluglage und Reiseflughöhe justieren zu können.

In bestimmten Situationen, wie z.B. in einer notwendigen Abbremssituation oder Ausweichsituation der Flugeinheit während des Geradeaus- oder Vorwärtsfluges kann die Verstellung eines oder mehrerer Flügel mit einem Anstellwinkel ß von 0° bis zu 180° erfolgen (nicht dargestellt), um den Flügel gegen die vorherrschende Strömungsrichtung anzustellen.

Der Anstellwinkel $\beta$ kann im Weiteren in Abhängigkeit eines einstellbaren Neigungswinkels $\alpha$ der Flugeinheit gegenüber dem Untergrund bzw. gegenüber einer Schwerkraftlinie S der Flugeinheit variierbar sein; bzw. beeinflusst die Flügelstellung in einem Anstellwinkel $\beta$ und die Einstellung der Rotoren / Propeller der Antriebseinheiten die Neigung der Flugeinheit und damit den Neigungswinkel $\alpha$.

Die Schwerkraftlinie S verläuft entlang der Wirkrichtung der auf die Flugeinheit einwirkenden Gravitationskraft, also immer senkrecht zur Erdoberfläche (Untergrund). Die Gravitationskraft ist dabei die durch die Wirkung des Gravitationsfeldes der Erde verursachte Kraft, die auf die Flugeinheit einwirkt.

Der Neigungswinkel $\alpha$ der Flugeinheit ist der kleinere der sich bildenden Winkel zwischen der Tragwerksebene E und der stets senkrechten Schwerkraftlinie S der Flugeinheit ein, damit ergibt sich der Neigungswinkel $\alpha$ immer zwischen der Schwerkraftlinie S der Flugeinheit und dem in Flugrichtung weisenden, gen Untergrund neigbaren Vorderkante der Flugeinheit.

Die Beziehungen der Winkel $\alpha$ und $\beta$ zueinander sind komplex und werden für jede Konfiguration der Flugeinheit und für die konkrete Verwendung an einem Fluggerät vorzugsweise aus mathematischen Modellen konkret ermittelt und optimiert.

Durch die verschiedene Anströmung und Stellung der Flügel während der verschiedenen Flugphasen / Neigung der Flugeinheit kann eine Kraft erzeugt werden, die entweder zur Neigungsänderung der Flugeinheit und/oder zur Erhöhung/Verringerung des Auftriebes genutzt werden kann.

Z.B. kann bei einer Neigung der Flugeinheit mit einem Neigungswinkel $\alpha$ in einem Bereich > 0° und < 90°, wie z.B. in der Abkipp- bzw. Aufkipp-Phase vorgesehen, durch geeignete Verstellung des Anstellwinkels $\beta$ des /der Flügel ein sich z.B. während des Abkippens der Flugeinheit aus der Vorwärtsflug-Phase verringernder Auftrieb der Flügel ausgeglichen werden.

Die optimalen Winkelverhältnisse verhalten sich transient über die Zeit und sind entsprechend variabel einzustellen.

Vorzugsweise Einstellbereiche bei den verschiedenen Flugphasen können in etwa sein:

Senkrecht-Start: $\alpha$ = 90°, $\beta$ = 60°-120°

Aufkippen: $\alpha$ =90-45°, $\beta$ = 180-90°

Reiseflug /Vorwärtsflug: $\alpha$ =45°-0°, $\beta$ = 45-135°

Abkippen: $\alpha$ = 90-45°, $\beta$ = 180-90°

Senkrecht-Landung: $\alpha$ = 90°, $\beta$ = 60°-120°

Zum Kippen der Flugeinheit werden vorzugsweise einzelne oder mehrere in Flugrichtung vorderen/unteren Flügel gegenüber einzelnen oder mehreren in Flugrichtung hinteren/oberen Flügel mit einem unterschiedlichen Anstellwinkel β angestellt. Durch die Differenz der verschieden großen Kräfte stellt sich ein Drehmoment um die Querachse (quer zur Mittelachse M) der Flugeinheit ein, was zu einer Aufkipp/Abkippbewegung führt.

Die Winkeldifferenz der Anstellwinkel β der Flügel liegt hierbei vorzugsweise bei:

$$\texttt{delta } \beta = \beta_{\texttt{(Flügel vorn)}} - \beta_{\texttt{(Flügel hinten)}} = 0-45°$$

Mit derartigen Ausführungen und Verstellmöglichkeiten des /der Flügel kann nicht nur die Auftriebsleistung der Flugeinheit verbessert und damit die Antriebsleistung der Antriebseinheiten reduziert und die Effizienz der Flugeinheit erhöht werden, sondern vornehmlich auch die Flugstabilität der Flugeinheit verbessert werden.

Zur Ausführung der vorstehend beschriebenen Betriebsweisen der Flugeinheit mit dem /den Flügel(n) kann eine vorgesehene Steuerungstechnik der Flugeinheit beispielsweise zum Ausgeben eines Steuersignals zum Schalten und zur Leistungssteuerung der Antriebseinheiten eingerichtet und ausgebildet sein. Im Weiteren kann die Steuerungstechnik zum Ausgeben eines Steuersignals zum Einstellen des Neigungswinkels α der Flugeinheit und des Anstellwinkels ß der Flügel eingerichtet und ausgebildet sein. Die Kupplungseinrichtung kann entsprechend als steuerbare Kupplungseinrichtung ausgebildet ist. Im Weiteren kann die Steuereinheit der Flugeinheit zusätzlich zum Ausgeben eines Steuersignals zur Ansteuerung einer steuerbaren Kupplungseinrichtung zur An- bzw. Abkopplung der Flugeinheit mit einer Transporteinheit eines Fluggerätes ausgebildet sein.

Weiter ist zur Verbesserung der Flugeigenschaften der Flugeinheit vorgesehen, dass wenigstens eine Anzahl an Antriebseinheiten zumindest einen Turbinen-Propeller (sogenannte Impeller) aufweisen.

Die Turbinen-Propeller weisen in vornehmlich zylindrisch ausgebildeten Strömungsröhren angeordnete Propeller auf, und haben infolge ihrer höheren spezifischen Auftriebs- bzw. Schubleistung typischerweise einen kleineren Durchmesser als die üblichen Propeller bei gleicher Antriebsleistung.

Damit kann die Flugeinheit mit einem günstigeren Größen- und Massenverhältnis zwischen Antriebseinheiten und Flügel zu Gunsten von Flügeln mit größeren Tragflächen konzipiert werden, was neben einem effizienteren, energiesparenderen Betrieb der Flugeinheit zugleich die Aerodynamik der Flugeinheit weiter verbessert.

Vorteilhafte Ausgestaltungen und Weiterbildungen der Erfindung gehen auch aus den zugehörigen Zeichnungen hervor.

Die zugehörigen Zeichnungen zeigen in einer schematischen Darstellung in

Fig. 1a       Draufsicht auf eine erfindungsgemäße Flugeinheit in einer ersten Ausführungsform mit vier Flügeln und 14 Propeller-Antriebseinheiten,

Fig. 1b       Draufsicht auf eine erfindungsgemäße Flugeinheit in einer zweiten Ausführungsform mit vier Flügeln und 14 Propeller-Antriebseinheiten,

Fig. 1c       Draufsicht auf eine erfindungsgemäße Flugeinheit in einer dritten Ausführungsform mit sechs Flügeln und 18 Propeller-Antriebseinheiten,

Fig. 1d       Draufsicht auf eine erfindungsgemäße Flugeinheit in einer vierten Ausführungsform mit vier Flügeln und 14 Antriebseinheiten mit jeweils zwei Turbinen-Propeller,

Fig. 2a       Isometrische Darstellung der Flugeinheit nach Fig. 1a in einer Steigflug-Phase (Lifting),

Fig. 2b       Isometrische Darstellung der Flugeinheit nach Fig. 1a in einer Aufkipp-/ bzw. Abkipp-Phase,

Fig. 2c       Isometrische Darstellung der Flugeinheit nach Fig. 1a in einer Vorwärtsflug-Phase,

Fig. 3a       Seitenansicht der Flugeinheit nach Fig. 2a,

Fig. 3b       Seitenansicht der Flugeinheit nach Fig. 2b,

Fig. 3c       Seitenansicht der Flugeinheit nach Fig. 2c,

Fig. 4a       Isometrische Darstellung eines Fluggerätes mit der Flugeinheit nach Fig. 1b und einer Transporteinheit während des Startvorganges des Fluggerätes in einer Steigflug-Phase der Flugeinheit (Lifting),

Fig. 4b      Isometrische Darstellung des Fluggerätes nach Fig. 4a in einer Aufkipp-Phase der Flugeinheit,

Fig. 4c      Isometrische Darstellung des Fluggerätes nach Fig. 4a während des Reiseflugbetriebes des Fluggerätes in einer Vorwärtsflug-Phase der Flugeinheit,

Fig. 5a      Seitenansicht des Fluggerätes nach Fig. 4a,

Fig. 5b      Seitenansicht des Fluggerätes nach Fig. 4b,

Fig. 5c      Seitenansicht des Fluggerätes nach Fig. 4c,

Fig. 6a,b,c      Isometrische Darstellung des Fluggeräts nach Fig. 1c in einer Steigflug-Phase (Lifting), in einer Aufkipp-/ bzw. Abkipp-Phase und in einer Vorwärtsflug-Phase,

Fig. 7a,b,c      Seitenansicht der Flugeinheit nach Fig. 6a,b,c,

Fig. 8a,b,c      Isometrische Darstellung der Flugeinheit nach Fig. 1d in einer Steigflug-Phase (Lifting), in einer Aufkipp-/ bzw. Abkipp-Phase und in einer Vorwärtsflug-Phase,

Fig. 9a,b,c      Seitenansicht der Flugeinheit nach Fig. 8a,b,c

Fig. 10a      isometrische Detaildarstellung eines Tragwerksbalkens mit einem Flügel und mit beidseitig am Tragwerksbalken-Abschnitt ausgebildetem Drehlager,

Fig. 10b      Draufsicht zur Detaildarstellung nach Fig. 10a,

Fig. 11a      isometrische Detaildarstellung eines Tragwerksbalkens mit einem Flügel und mit beidseitig am Flügel anliegend ausgebildetem Drehlager,

Fig. 11b      Draufsicht zur Detaildarstellung nach Fig. 11a,

Fig. 12a      isometrische Detaildarstellung eines Flügels mit drei integrierten Drehlagern,

Fig. 12b      Draufsicht zur Detaildarstellung nach Fig. 12a.

In den im Folgenden erläuterten Beispielen wird auf die beigefügten Zeichnungen Bezug genommen, die einen Teil der Beispiele bilden und in denen zur Veranschaulichung spezifische Ausführungsformen gezeigt sind, in denen die Erfindung ausgeübt werden kann.

In dieser Hinsicht wird Richtungsterminologie wie etwa "oben", "unten", "vorne", "hinten", "vorderes", "hinteres" usw. mit Bezug auf die Orientierung der beschriebenen Figuren verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen.

Es versteht sich zudem, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

In den Figuren werden identische oder ähnliche Elemente mit identischen Bezugszeichen versehen, soweit dies zweckmäßig ist.

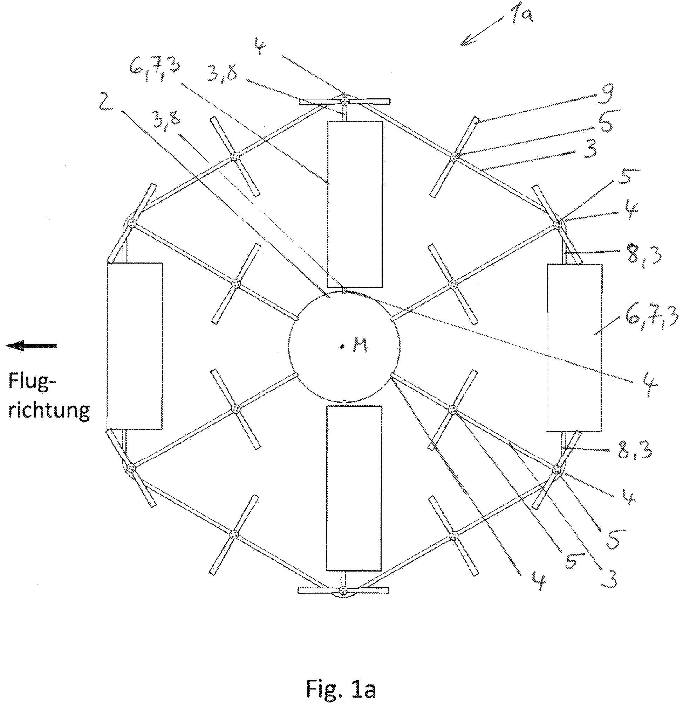

Die **Fig. 1a** zeigt eine erfindungsgemäße Flugeinheit in einer ersten Ausführungsform mit einer Zentraleinheit, zwölf längserstreckten Tragwerksbalken, die sich jeweils zwischen zwei Knotenpunkten der Tragwerksstruktur erstrecken und miteinander verbunden die Tragwerksstruktur bilden, sowie vierzehn Antriebseinheiten.

Die Knotenpunkte der Tragwerksstruktur sind zum einen die Knotenpunkte der miteinander verbundenen Tragwerksbalken und zum anderen die Knotenpunkte, an denen die Tragwerksbalken mit der Zentraleinheit verbunden sind.

Die Antriebseinheiten sind an den Knotenpunkten der miteinander verbundenen Tragwerksbalken und / oder in einem Längenabschnitt einiger Tragwerksbalken angeordnet und weisen jeweils einen Propeller auf.

Die zwölf Tragwerksbalken bilden die Tragwerksstruktur der Flugeinheit, wobei einige - im Ausführungsbeispiel sechs - außenliegende Tragwerksbalken die äußere, polygonartig gestaltete Begrenzung der Tragwerksstruktur bilden und einige - im Ausführungsbeispiel sechs - innenliegende Tragwerksbalken die innere, sternförmig gestaltete Tragwerksstruktur bilden.

Bei der sternförmigen Gestaltung der inneren Tragwerksstruktur gehen die geometrisch gedachten Verlängerungen der innenliegenden Tragwerksbalken gemeinsam und radial von der Mittelachse M der Flugeinheit bzw. von der sich deckenden Mittenachse der Zentraleinheit aus.

Vier der zwölf Tragwerksbalken weisen jeweils einen erfindungsgemäßen Flügel mit einer Tragflächenform auf, welcher jeweils längserstreckt in Richtung des jeweiligen längserstreckten Tragwerksbalkens ausgebildet ist, wobei zwei der Flügel längserstreckt an jeweils einem außenliegenden Tragwerksbalken angeordnet sind und die zwei anderen Flügel längserstreckt an jeweils einem innenliegenden Tragwerksbalken angeordnet sind.

Jeder Flügel ist in einem bestimmten Längenabschnitt des jeweiligen Tragwerksbalkens (Flügel-Abschnitt) drehbar gegenüber dem Tragwerksbalken angeordnet oder ausgebildet.

Neben dem Flügel-Abschnitt weist der jeweilige Tragwerksbalken zwei weitere Längenabschnitte (Träger-Abschnitt) auf, die beidseitig an den Flügel-Abschnitt angrenzen und den Flügel entlang des Tragwerkbalkens und innerhalb der Tragwerksstruktur halten.

Die Flügel sind derart innerhalb der Tragwerksstruktur an verschiedenen Tragwerksbalken verteilt angeordnet, dass sich das Flügelpaar der außenliegenden Tragwerksbalken und das Flügelpaar der innenliegenden Tragwerksbalken von der Mittelachse M der Flugeinheit aus gesehen jeweils symmetrisch gegenüber liegen.

In der vorgesehenen Flugrichtung der Flugeinheit in einer Vorwärtsflug-Phase (Darstellung als Pfeil mit der Bezeichnung "Flugrichtung") kann die Flugeinheit so ausgerichtet sein, dass alle Flügel in ihrer Längserstreckung im Wesentlichen quer zur Flugrichtung angeordnet sind, wobei in Flugrichtung gesehen die Flügel des Flügelpaars der außenliegenden Tragwerksbalken hintereinander und die Flügel des Flügelpaars der innenliegenden Tragwerksbalken nebeneinander positioniert sind.

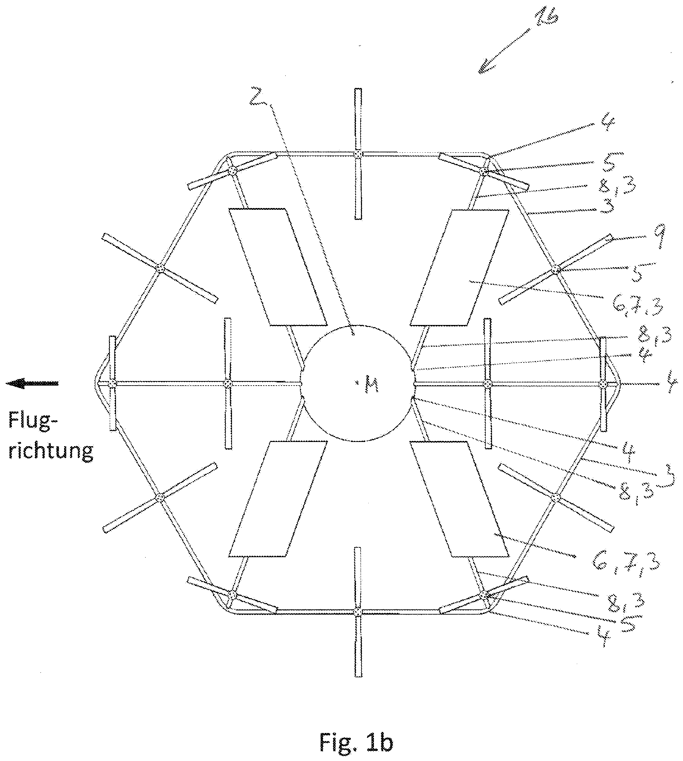

Die **Fig. 1b** zeigt eine erfindungsgemäße Flugeinheit in einer zweiten Ausführungsform mit einer Zentraleinheit, zwölf längserstreckten Tragwerksbalken, die sich jeweils zwischen zwei Knotenpunkten der Tragwerksstruktur erstrecken und miteinander verbunden die Tragwerksstruktur bilden, sowie vierzehn Antriebseinheiten.

Die Knotenpunkte der Tragwerksstruktur sind zum einen die Knotenpunkte der miteinander verbundenen Tragwerksbalken und zum anderen die Knotenpunkte, die durch die Verbindung der Tragwerksbalken mit der Zentraleinheit gebildet sind.

Die Antriebseinheiten sind in Nähe der Knotenpunkte der miteinander verbundenen Tragwerksbalken und / oder in einem Längenabschnitt einiger Tragwerksbalken angeordnet und weisen jeweils einen Propeller auf.

Die zwölf Tragwerksbalken bilden die Tragwerksstruktur der Flugeinheit, wobei einige - im Ausführungsbeispiel sechs - außenliegende Tragwerksbalken die äußere, polygonartig gestaltete Begrenzung der Tragwerksstruktur bilden und einige - im Ausführungsbeispiel sechs - innenliegende Tragwerksbalken die innere, strahlenförmig gestaltete Tragwerksstruktur bilden.

Bei der strahlenförmigen Gestaltung der inneren Tragwerksstruktur gehen die geometrisch gedachten Verlängerungen von jeweils drei innenliegenden Tragwerksbalken von je einem gedachten Punkt der Zentraleinheit aus, der sich außerhalb der Mittelachse M der Flugeinheit befindet (nicht dargestellt). Die beiden gedachten Punkte der Zentraleinheit sind auf einer durch die Mittelachse M der Flugeinheit durchgehenden Linie symmetrisch gegenüberliegend angeordnet.

Vier innere Tragwerksbalken der inneren Tragwerksstruktur, nämlich die jeweils länger erstreckten, sich symmetrisch gegenüberliegend angeordneten Tragwerksbalken der strahlenförmigen Tragwerksstruktur weisen jeweils einen erfindungsgemäßen, längserstreckt ausgebildeten und angeordneten Flügel auf.

Jeder Flügel ist wiederrum in einem bestimmten Längenabschnitt des jeweiligen Tragwerksbalkens (Flügel-Abschnitt) drehbar gegenüber dem Tragwerksbalken angeordnet oder ausgebildet.

Neben dem Flügel-Abschnitt weist der jeweilige Tragwerksbalken zwei weitere Längenabschnitte (Träger-Abschnitt) auf, die beidseitig an den Flügel-Abschnitt angrenzen und den Flügel entlang des Tragwerkbalkens und innerhalb der Tragwerksstruktur halten.

In der vorgesehenen Flugrichtung der Flugeinheit in einer Vorwärtsflug-Phase (Darstellung als Pfeil mit der Bezeichnung "Flugrichtung") kann die Flugeinheit so ausgerichtet sein, dass alle Flügel in ihrer Längserstreckung im Wesentlichen annähernd quer zur Flugrichtung angeordnet sind, wobei in Flugrichtung gesehen die Flügel paarweise hintereinander und paarweise nebeneinander positioniert sind.

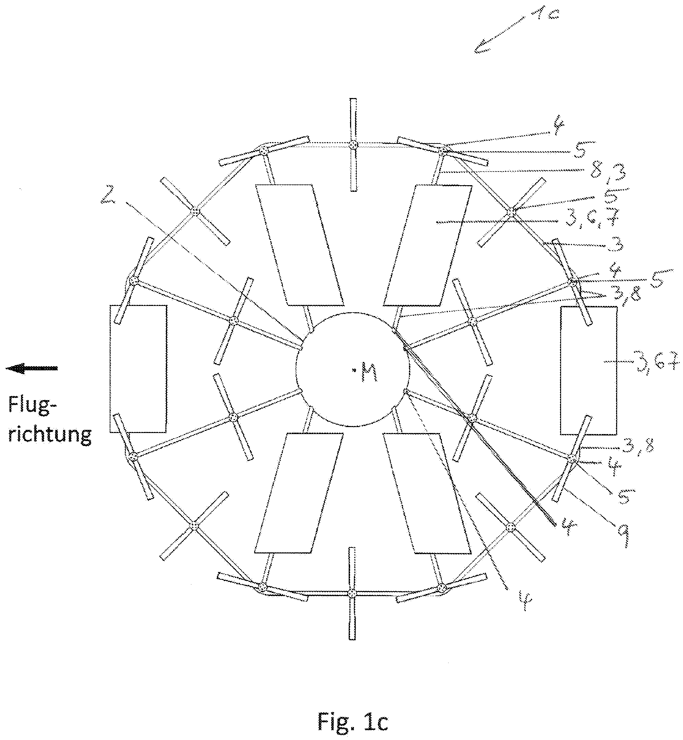

Die **Fig. 1c** zeigt eine erfindungsgemäße Flugeinheit in einer dritten Ausführungsform mit einer Zentraleinheit, 16 miteinander verbundenen, längserstreckten Tragwerksbalken und 18 Antriebseinheiten.

Die Knotenpunkte der Tragwerksstruktur sind durch die miteinander verbundenen Tragwerksbalken und durch die mit der Zentraleinheit verbundenen Tragwerksbalken gebildet.

Die Antriebseinheiten sind an den Knotenpunkten der miteinander verbundenen Tragwerksbalken und / oder in einem Längenabschnitt einiger Tragwerksbalken angeordnet und weisen jeweils einen Propeller auf.

Die 16 Tragwerksbalken bilden die Tragwerksstruktur der Flugeinheit, wobei einige - im Ausführungsbeispiel acht - außenliegende Tragwerksbalken die äußere, polygonartig gestaltete Begrenzung der Tragwerksstruktur bilden und einige - im Ausführungsbeispiel acht - innenliegende Tragwerksbalken die innere, kombiniert stern- und strahlenförmig gestaltete Tragwerksstruktur bilden.

Bei der kombiniert stern- und strahlenförmigen Gestaltung der inneren Tragwerksstruktur gehen die geometrisch gedachten Verlängerungen von vier der innenliegenden Tragwerksbalken sternförmig / radial von der Mittelachse M der Flugeinheit aus und die geometrisch gedachten Verlängerungen der vier weiteren innenliegenden Tragwerksbalken paarweise strahlenförmig von je einem gedachten Punkt der Zentraleinheit aus, der sich außerhalb der Mittelachse M der Flugeinheit befindet (nicht dargestellt). Die beiden gedachten Punkte außerhalb der Mittelachse M der Flugeinheit sind auf einer durch die Mittelachse M der Flugeinheit durchgehenden Linie symmetrisch gegenüberliegend angeordnet.

Sechs Tragwerksbalken weisen jeweils einen erfindungsgemäßen Flügel auf, welcher jeweils längserstreckt in Richtung des jeweiligen längserstreckten Tragwerksbalkens ausgebildet ist, wobei zwei der Flügel längserstreckt an jeweils einem außenliegenden Tragwerksbalken angeordnet sind und die vier weiteren Flügel längserstreckt an jeweils einem innenliegenden Tragwerksbalken der strahlenförmig gestalteten Tragwerksstruktur angeordnet sind. Alternativ können die vier weiteren Flügel auch an jeweils einem innenliegenden Tragwerksbalken der sternförmig gestalteten Tragwerksstruktur angeordnet sein.

Die Flügel sind derart verteilt angeordnet, dass sich das Flügelpaar der außenliegenden Tragwerksbalken und die beiden Flügelpaare der innenliegenden Tragwerksbalken von der Mittelachse M der Flugeinheit aus gesehen symmetrisch gegenüber liegen.

Jeder Flügel ist wiederrum in einem bestimmten Längenabschnitt des jeweiligen Tragwerksbalkens (Flügel-Abschnitt) drehbar gegenüber dem Tragwerksbalken angeordnet oder ausgebildet.

Neben dem Flügel-Abschnitt weist der jeweilige Tragwerksbalken zwei weitere Längenabschnitte (Träger-Abschnitt) auf, die beidseitig an den Flügel-Abschnitt angrenzen und den Flügel entlang des Tragwerkbalkens und innerhalb der Tragwerksstruktur halten.

In der vorgesehenen Flugrichtung der Flugeinheit in einer Vorwärtsflug-Phase (Darstellung als Pfeil mit der Bezeichnung "Flugrichtung") kann die Flugeinheit so ausgerichtet sein, dass die beiden Flügel der außenliegenden Tragwerksbalken in ihrer Längserstreckung im Wesentlichen quer zur Flugrichtung angeordnet sind und die vier Flügel der innenliegenden Tragwerksbalken in ihrer Längserstreckung im Wesentlichen annähernd quer zur Flugrichtung angeordnet sind.

In dieser Flugrichtung können die Flügel des Flügelpaars der außenliegenden Tragwerksbalken hintereinander und die Flügel der innenliegenden Tragwerksbalken paarweise hintereinander und paarweise nebeneinander positioniert sein.

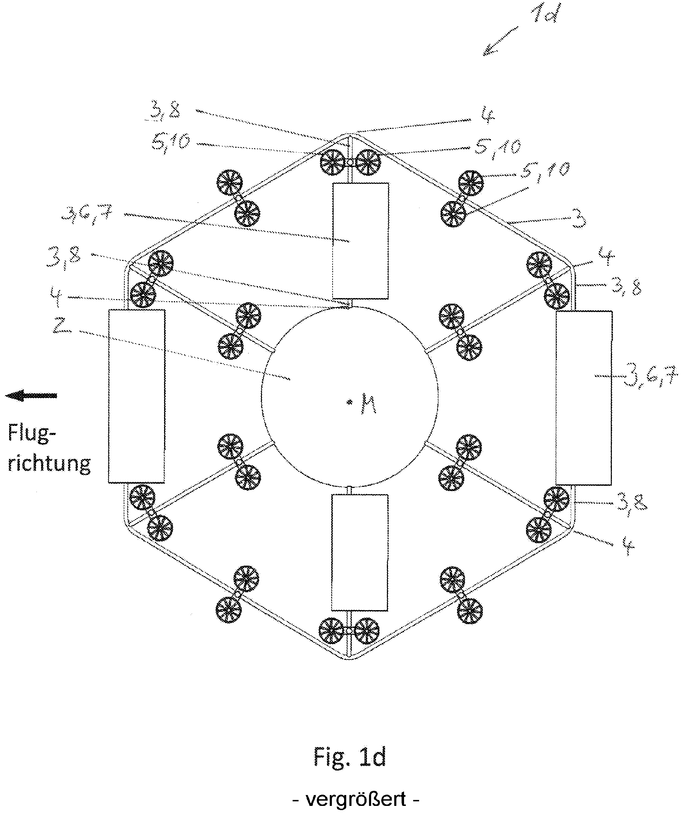

Die **Fig. 1d** zeigt eine erfindungsgemäße Flugeinheit in einer vierten Ausführungsform mit einer Zentraleinheit, zwölf miteinander verbundenen, längserstreckten Tragwerksbalken und 28 Antriebseinheiten.

Die Knotenpunkte der Tragwerksstruktur sind durch die miteinander verbundenen Tragwerksbalken und durch die mit der Zentraleinheit verbundenen Tragwerksbalken gebildet.

Die Antriebseinheiten sind paarweise Nahe der Knotenpunkte der miteinander verbundenen Tragwerksbalken und / oder paarweise in einem Längenabschnitt einiger Tragwerksbalken angeordnet und weisen jeweils einen Turbinen-Propeller (sogenannte Impeller) auf, bei denen der Propeller in jeweils einer zylindrisch ausgebildeten Strömungsröhre angeordnet ist.

Die Turbinen-Propeller weisen einen deutlich kleineren Durchmesser gegenüber dem Durchmesser der Propeller der Antriebseinheiten nach Fig. 1a bis 1c auf, so dass einerseits eine deutlich größere Anzahl an Antriebseinheiten an der Tragwerksstruktur gegenüber den Ausführungen nach Fig. 1a bis 1c angeordnet werden kann und andererseit die Tragstruktur und damit das Gesamt-Umfangsmaß der Flugeinheit reduziert werden kann.

Die Flugeinheit in Fig. 1d ist gegenüber der Flugeinheit nach den Figuren 1a, b, c vergrößert dargestellt. Die Vergrößerung hat zur Folge, dass die Zentraleinheit nach der Darstellung in der Fig. 1d, im Vergleich größer erscheint.

Die Zentraleinheit in der Fig. 1d ist jedoch gleich groß wie die Zentraleinheit nach Fig. 1a, b, c vorgesehen, wogegen der Umfang der Tragstruktur in der Fig. 1d kleiner als der Umfang der Tragstruktur nach Fig. 1a, b, c vorgesehen ist.

Alternativ kann durch die Verwendung der kleineren Turbinen-Propeller eine Flugeinheit gestaltet werden, die mehr Platz für die Anordnung von Flügeln vorsehen kann (nicht dargestellt).

Die zwölf Tragwerksbalken bilden die Tragwerksstruktur der Flugeinheit, wobei einige - im Ausführungsbeispiel sechs - außenliegende Tragwerksbalken die äußere, polygonartig gestaltete Begrenzung der Tragwerksstruktur bilden und einige - im Ausführungsbeispiel sechs - innenliegende Tragwerksbalken die innere, sternförmig gestaltete Tragwerksstruktur bilden.

Bei der sternförmigen Gestaltung der inneren Tragwerksstruktur gehen die geometrisch gedachten Verlängerungen der innenliegenden Tragwerksbalken gemeinsam, radial von der Mittelachse M der Flugeinheit aus.

Vier der zwölf Tragwerksbalken weisen jeweils einen erfindungsgemäßen Flügel auf, welcher jeweils längserstreckt in Richtung des jeweiligen längserstreckten Tragwerksbalkens ausgebildet ist, wobei zwei der Flügel längserstreckt an jeweils einem außenliegenden Tragwerksbalken angeordnet sind und die zwei anderen Flügel längserstreckt an jeweils einem innenliegenden Tragwerksbalken angeordnet sind.

Jeder Flügel ist wiederrum in einem bestimmten Längenabschnitt des jeweiligen Tragwerksbalkens (Flügel-Abschnitt) drehbar gegenüber dem Tragwerksbalken angeordnet oder ausgebildet.

Neben dem Flügel-Abschnitt weist der jeweilige Tragwerksbalken zwei weitere Längenabschnitte (Träger-Abschnitt) auf, die beidseitig an den Flügel-Abschnitt angrenzen und den Flügel entlang des Tragwerkbalkens und innerhalb der Tragwerksstruktur halten.

Die Flügel sind derart verteilt angeordnet, dass sich das Flügelpaar der außenliegenden Tragwerksbalken und das Flügelpaar der innenliegenden Tragwerksbalken von der Mittelachse M der Flugeinheit aus gesehen jeweils symmetrisch gegenüber liegen.

In der vorgesehenen Flugrichtung der Flugeinheit in einer Vorwärtsflug-Phase (Darstellung als Pfeil mit der Bezeichnung "Flugrichtung") kann die Flugeinheit so ausgerichtet sein, dass alle Flügel in ihrer Längserstreckung im Wesentlichen quer zur Flugrichtung angeordnet sind, wobei in Flugrichtung gesehen die Flügel des Flügelpaars der außenliegenden Tragwerksbalken hintereinander und die Flügel des Flügelpaars der innenliegenden Tragwerksbalken nebeneinander positioniert sind.

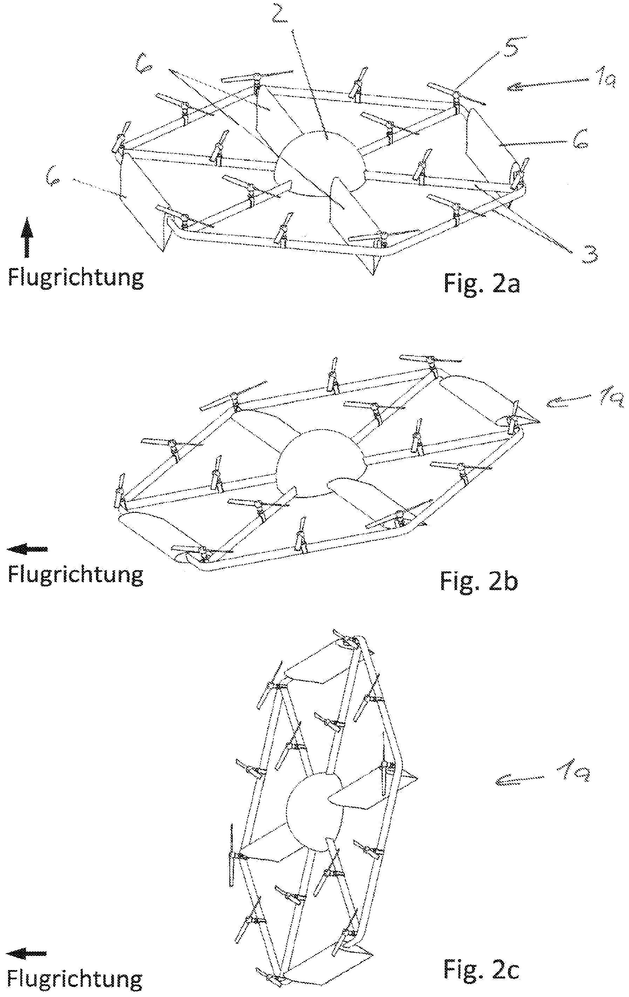

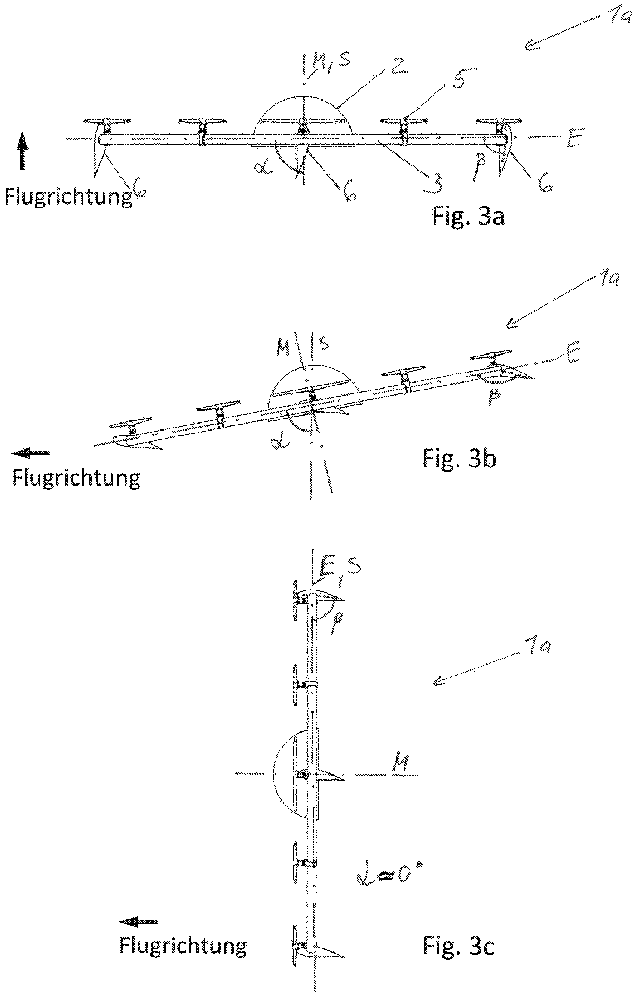

Die **Figuren 2a bis 2c** und **3a bis 3c** zeigen die Flugeinheit nach Fig. 1a in verschiedenen Flugphasen.

In den verschiedenen Flugphasen werden die drehbeweglichen Flügel mit einem variabel einstellbaren Anstellwinkel $\beta$, der zwischen einer von der Tragwerkstruktur der Flugeinheit gebildeten Tragwerksebene E und einer mittleren Querschnittsebene des Flügels eingeschlossen wird, einzeln oder gemeinsam angesteuert und entsprechend der Anforderungen an die jeweiligen Flugbedingungen individuell eingestellt.

Der Anstellwinkel $\beta$ kann im Weiteren in Abhängigkeit des Neigungswinkels $\alpha$ der Flugeinheit gegenüber der Schwerkraftlinie S der Flugeinheit eingestellt werden bzw. beeinflussen die Flügelstellungen in einem bestimmten Anstellwinkel $\beta$ und die Einstellung der Propeller der Antriebseinheiten die Neigung der Flugeinheit und damit den Neigungswinkel $\alpha$.

Die **Figuren 2a, 3a** zeigen die Flugeinheit nach Fig. 1a in einer Steigflug-Phase (Lifting).

In dieser Flugphase befindet sich die Flugeinheit im Wesentlichen in einer horizontal gerichteten Fluglage gegenüber dem Untergrund.

Der Neigungswinkel $\alpha$ der Flugeinheit, der sich zwischen der Tragwerksebene E und der senkrechten Schwerkraftlinie S der Flugeinheit spannt, beträgt etwa 90°.

In dieser Flugphase werden die drehbeweglichen Flügel z.B. einzeln oder gemeinsam vorzugsweise mit einem Anstellwinkel ß von etwa 90° eingestellt, wie dargestellt.

Bei einer nicht dargestellten Sinkflug-Phase sind analoge Stellungen des Neigungswinkels $\alpha$ der Flugeinheit und des Anstellwinkels $\beta$ der Flügel vorgesehen.

Alternativ kann in einer Sinkflug-Phase der Anstellwinkel ß auf etwa 270° eingestellt sein (nicht dargestellt).

Die Stellung der Flügel erleichtert den Auftrieb in der Steigflugphase (oder auch in der Sinkflugphase) und stabilisiert dabei die gegenüber einem Untergrund im Wesentlichen horizontale Fluglage der Flugeinheit z.B. gegen Einflüsse von Seitenwinden.

In besonderen Situationen, wie beispielsweise bei ungünstigen Auf- oder Abwinden während der Steigflugphase oder auch in der Sinkflugphase, können die Flügel einzeln oder gemeinsam bis zu einem Anstellwinkel ß von etwa 270°, vorzugsweise bis zu einem Anstellwinkel ß von 180°, eingestellt werden, um ein notwendiges Abbremsen der Flugeinheit zu ermöglichen (nicht dargestellt).

Die **Figuren 2b, 3b** zeigen die Flugeinheit nach Fig. 1a in einer Aufkipp-/ bzw. Abkipp-Phase.

In dieser Flugphase befindet sich die Flugeinheit im Wesentlichen in einer gegenüber dem Untergrund geneigten Fluglage.

Der Neigungswinkel $\alpha$ der Flugeinheit ist in einem Bereich kleiner 90° und größer 0° eingestellt.

In dieser Flugphase werden die drehbeweglichen Flügel z.B. einzeln oder gemeinsam mit einem Anstellwinkel ß vorzugsweise in einem Bereich von etwa 90° bis etwa 180° eingestellt.

Die Stellung der Flügel in diesem Bereich unterstützt einerseits das Aufkippen oder Abkippen der Flugeinheit und stabilisiert andererseits die Flugeinheit in dieser Fluglage des Übergangs aus der horizontal gerichteten Fluglage in die nahezu vertikal gerichtete Fluglage der Flugeinheit und umgekehrt.

In der Fig. 3b ist z.B. ein Anstellwinkel ß aller Flügel von etwa 155° dargestellt.

Die **Figuren 2c, 3c** zeigen die Flugeinheit nach Fig. 1a in einer Vorwärtsflug-Phase auch Reiseflug-Phase genannt.

In dieser Flugphase befindet sich die Flugeinheit im Wesentlichen in einer gegenüber dem Untergrund nahezu vertikal ausgerichteten Fluglage.

Der Neigungswinkel $\alpha$ der Flugeinheit beträgt etwa 0° oder nahe 0°.

In dieser Flugphase sind die drehbeweglichen Flügel vorzugsweise mit einem Anstellwinkel ß in einem Bereich

**EP 4 281 363 B1**

von etwa 45° bis etwa 135° eingestellt, um eine optimale Umströmung und entsprechende Auftriebsleistung der Flügel für den Vorwärtsflug zu erzeugen und die Flugeinheit in ihrer angestrebten Fluglage und Reiseflughöhe justieren zu können.

In der Fig. 3c ist z.B. ein Anstellwinkel ß aller Flügel von etwa 80° dargestellt.

In bestimmten Situationen, wie z.B. bei einem notwendigen Abbrems- oder Ausweichmanöver der Flugeinheit während des Geradeaus- oder Vorwärtsfluges, kann die Verstellung eines oder mehrerer Flügel mit einem Anstellwinkel ß von 0° bis zu 180° erfolgen (nicht dargestellt), um die Flugeinheit schnell abbremsen oder umlenken zu können.

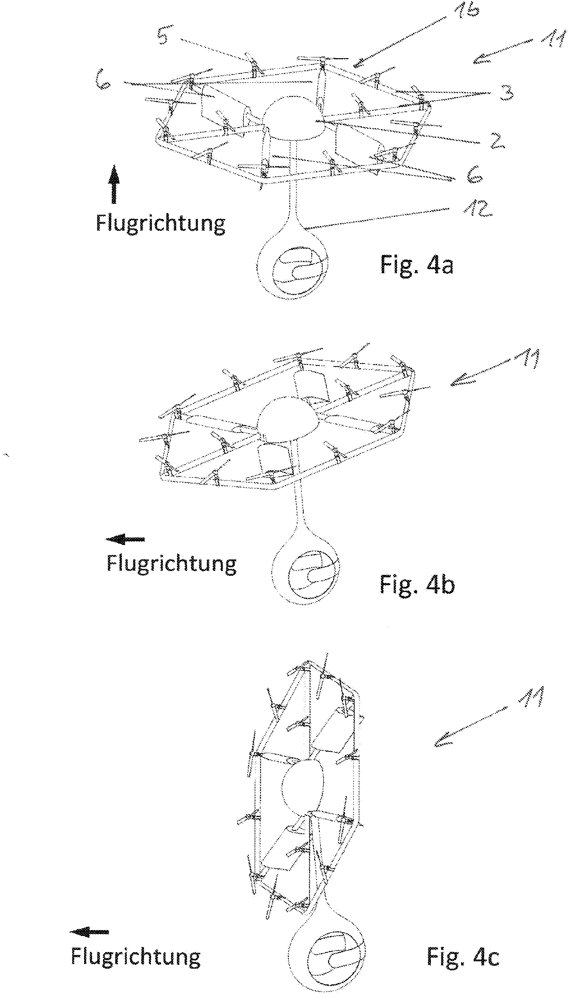

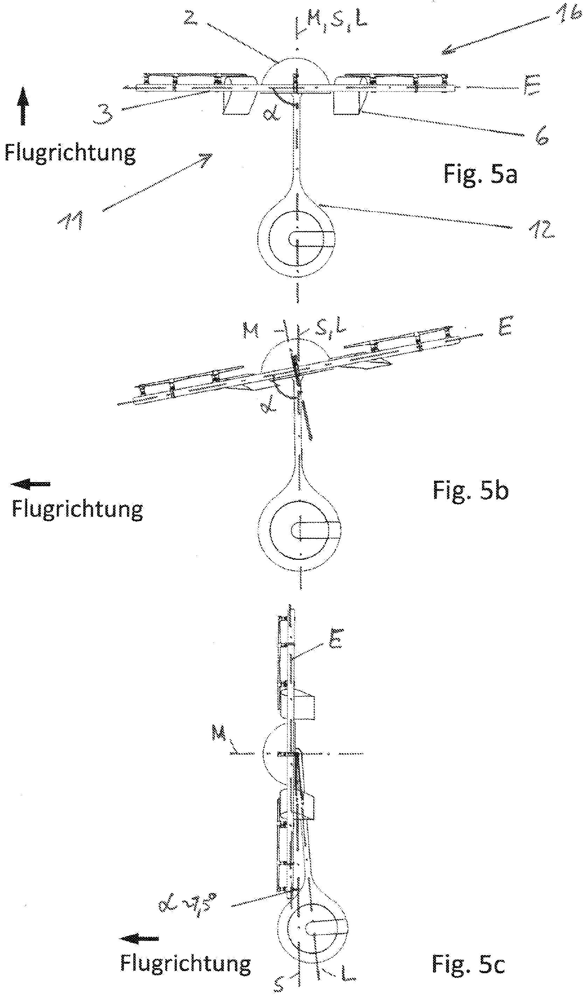

Die **Figuren 4a bis 4c** und **5a bis 5c** zeigen ein Fluggerät mit einer Flugeinheit nach Fig. 1b und einer an die Flugeinheit angekoppelten Transporteinheit in verschiedenen Flugphasen.

Die dargestellte Transporteinheit weist eine verschließbare Transportkapsel mit einem längserstreckten Schaft auf, wobei der Schaft mittels einer Gelenkkupplung mit der Zentraleinheit der Flugeinheit verbunden ist.

In der verschließbaren Transportkapsel der dargestellten Transporteinheit können Gegenstände oder Personen befördert werden.

In den verschiedenen Flugphasen des Fluggeräts ist die Transporteinheit mittels der freibeweglichen Gelenkkupplung im Wesentlichen senkrecht gegenüber dem Untergrund orientiert.

Die Längsachse L der rotationssymmetrisch ausgebildeten Transporteinheit deckt sich in den verschiedenen Flugphasen des Fluggerätes somit im Wesentlichen mit der senkrecht wirkenden Schwerkraftlinie S der Transporteinheit.

Ebenso deckt sich die senkrecht wirkende Schwerkraftlinie S der Flugeinheit im Wesentlichen mit der senkrecht wirkenden Schwerkraftlinie S der an die Flugeinheit angehängten Transporteinheit, wobei sie die gemeinsame Schwerkraftlinie S des Fluggeräts bilden.

Auf eine mögliche Besonderheit der Orientierung der Transporteinheit gegenüber dem Untergrund wird in Figur 4c, 5c hingewiesen.

Alternativ können jedoch auch beliebig andere Transporteinheiten mit anderen Verbindungskonfigurationen mit der erfindungsgemäßen Flugeinheit gekoppelt werden.

In den verschiedenen Flugphasen des dargestellten Fluggeräts werden die drehbeweglichen Flügel der Flugeinheit nach Fig. 1b mit einem variabel einstellbaren Anstellwinkel $\beta$ einzeln oder gemeinsam angesteuert und entsprechend der Anforderungen an die jeweiligen Flugbedingungen des Fluggeräts individuell eingestellt.

Der Anstellwinkel $\beta$ kann im Weiteren in Abhängigkeit des Neigungswinkels $\alpha$ der Flugeinheit nach Fig. 1b gegenüber der Schwerkraftlinie S der Flugeinheit bzw. des Fluggeräts eingestellt werden bzw. beeinflussen die Flügelstellungen in einem bestimmten Anstellwinkel $\beta$ und die Einstellung der Propeller der Antriebseinheiten die Neigung der Flugeinheit nach Fig. 1b und damit den Neigungswinkel $\alpha$.

Die Vorgänge und Einstellungen bezüglich der Flugeinheit 1b in den verschiedenen Flugphasen sind mit den vorstehend beschriebenen Vorgängen und Einstellungen zur Flugeinheit nach Fig. 1a in den verschiedenen Flugphasen vergleichbar, so dass im Folgenden bezüglich der Beschreibung der Flugeinheit auf die Ausführungen zu den Figuren **2a bis 2c** und **3a bis 3c** verwiesen wird.

Die **Figuren 4a, 5a** zeigen das Fluggerät in einer Steigflug-Phase (Lifting).

In dieser Flugphase befindet sich die Flugeinheit im Wesentlichen in einer horizontal gerichteten Fluglage gegenüber dem Untergrund, während die Transporteinheit mit ihrer Längsachse L im Wesentlichen senkrecht gegenüber dem Untergrund orientiert ist.

Der Neigungswinkel $\alpha$ der Flugeinheit, der sich zwischen der Tragwerksebene E und der senkrechten Schwerkraftlinie S der Flugeinheit bzw. des Fluggerätes spannt, beträgt etwa 90°.

Bezüglich der Beschreibung der Flugeinheit in dieser Flugphase wird im Weiteren auf die Ausführungen zu den Figuren **2a, 3a** verwiesen.

Bei einer nicht dargestellten Sinkflug-Phase sind analoge Stellungen des Neigungswinkels $\alpha$ der Flugeinheit und des Anstellwinkels $\beta$ der Flügel vorgesehen.

Die **Figuren 4b, 5b** zeigen das Fluggerät in einer Aufkipp-/ bzw. Abkipp-Phase.

In dieser Flugphase befindet sich die Flugeinheit im Wesentlichen in einer gegenüber dem Untergrund geneigten Fluglage, während die Transporteinheit mit ihrer Längsachse L auch in dieser Flugphase im Wesentlichen senkrecht gegenüber dem Untergrund orientiert bleibt.

Der Neigungswinkel $\alpha$ der Flugeinheit ist in einem Bereich kleiner 90° und größer 0° eingestellt.

Bezüglich der Beschreibung der Flugeinheit in dieser Flugphase wird im Weiteren auf die Ausführungen zu den Figuren **2b, 3b** verwiesen.

Die **Figuren 4c, 5c** zeigen das Fluggerät in einer Vorwärtsflug-Phase bzw. in der Reiseflug-Phase.

In dieser Flugphase befindet sich die Flugeinheit im Wesentlichen in einer gegenüber dem Untergrund nahezu vertikal ausgerichteten Fluglage, ohne jedoch mit der Transporteinheit zu kollidieren, die mit ihrer Längsachse L in dieser Flugphase im Wesentlichen senkrecht oder nahezu senkrecht gegenüber dem Untergrund orientiert ist.

D.h. der Schaft der Transporteinheit ist so schmal und längserstreckt gestaltet, dass in dieser Flugphase die nach unten gen Untergrund geneigte Flugeinheit und insbesondere auch die Flügel der Flugeinheit nicht durch den Korpus der Transporteinheit behindert werden.

Zudem kann sich bei der insbesondere angestrebten höheren Fluggeschwindigkeit des Fluggerätes in der Reiseflug-Phase, wie dargestellt, eine resultierende geringfügige Neigung der Transporteinheit mit ihrer Längsachse L gegenüber deren Schwerkraftlinie S und damit gegenüber dem Untergrund einstellen, die sich aus dem Vektor der senkrecht wirkenden Schwerkraft der Transporteinheit und der auf die Transporteinheit einwirkende Windkraft ergibt.

Dieser physikalische Effekt verhindert zusätzlich eine Kollision der Flugeinheit mit der Transporteinheit.

Der Neigungswinkel $\alpha$ der Flugeinheit beträgt in diesem Ausführungsbeispiel etwa 1,5°.

Bezüglich der Beschreibung der Flugeinheit in dieser Flugphase wird im Weiteren auf die Ausführungen zu den Figuren **2c, 3c** verwiesen.

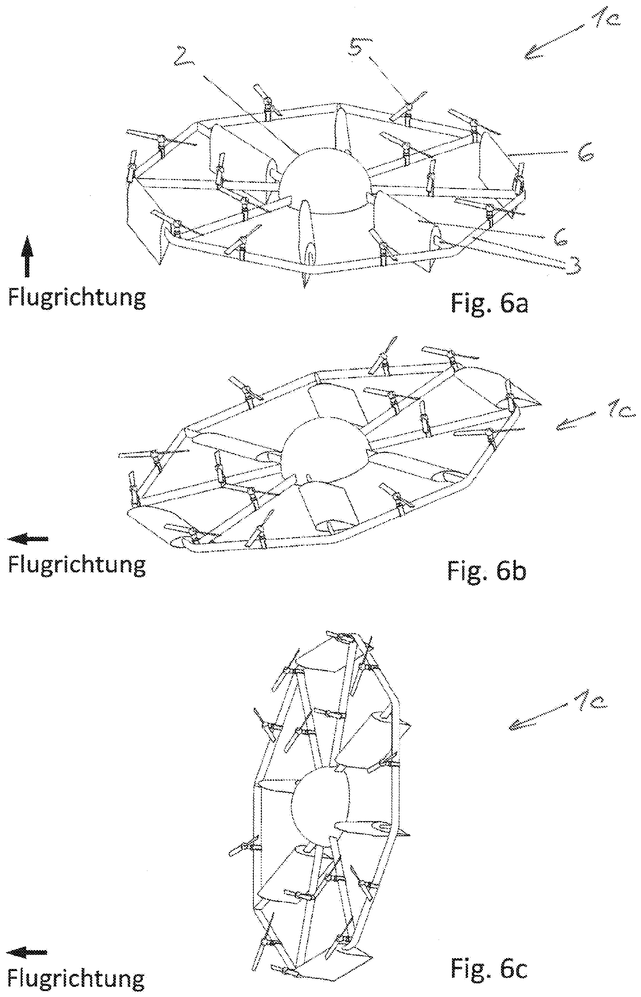

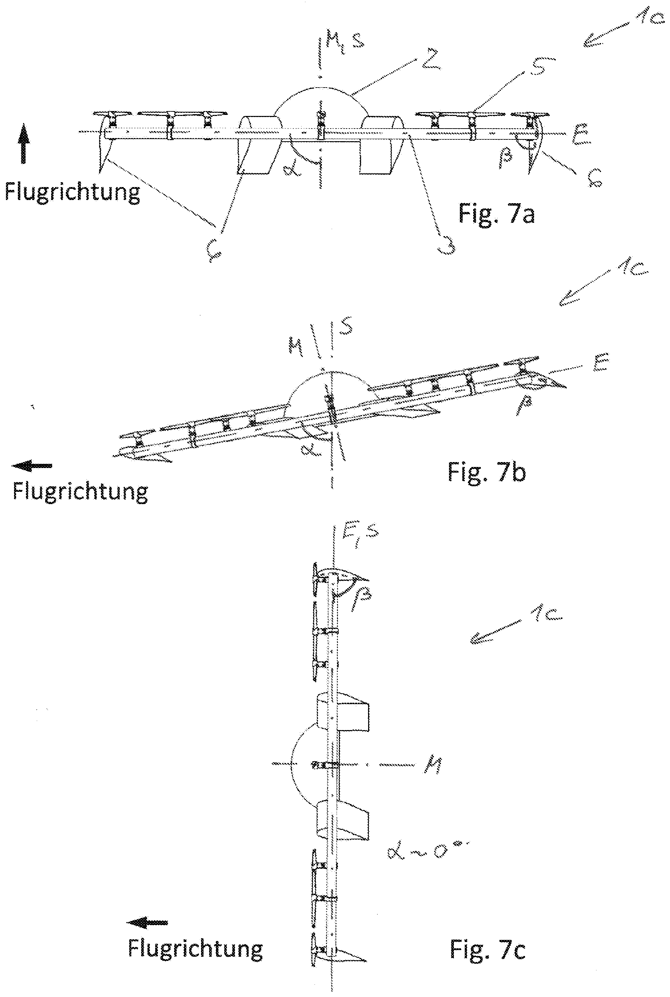

Die **Figuren 6a bis 6c** und **7a bis 7c** zeigen die Flugeinheit nach Fig. 1c in verschiedenen Flugphasen.

In den verschiedenen Flugphasen dieser Flugeinheit nach Fig. 1c werden die drehbeweglichen Flügel ebenfalls mit einem variabel einstellbaren Anstellwinkel $\beta$ einzeln oder gemeinsam angesteuert und entsprechend der Anforderungen an die jeweiligen Flugbedingungen individuell eingestellt.

Der Anstellwinkel $\beta$ kann im Weiteren in Abhängigkeit des Neigungswinkels $\alpha$ der Flugeinheit nach Fig. 1c gegenüber der Schwerkraftlinie S der Flugeinheit eingestellt werden bzw. beeinflussen die Flügelstellungen in einem bestimmten Anstellwinkel $\beta$ und die Einstellung der Propeller der Antriebseinheiten die Neigung der Flugeinheit nach Fig. 1c und damit den Neigungswinkel $\alpha$.

Die **Figuren 6a, 7a** zeigen die Flugeinheit nach Fig. 1c in einer Steigflug-Phase (Lifting).

Die **Figuren 6b, 7b** zeigen die Flugeinheit nach Fig. 1c in einer Aufkipp-/ bzw. Abkipp-Phase.

Die **Figuren 6c, 7c** zeigen die Flugeinheit nach Fig. 1c in einer Vorwärtsflug-Phase.

Die Vorgänge und Einstellungen bezüglich der Flugeinheit 1c in den verschiedenen Flugphasen sind mit den vorstehend beschriebenen Vorgängen und Einstellungen zur Flugeinheit nach Fig. 1a in den verschiedenen Flugphasen vergleichbar, so dass bezüglich der Beschreibung der Flugeinheit auf die Ausführungen zu den Figuren **2a bis 2c** und **3a bis 3c** verwiesen wird.

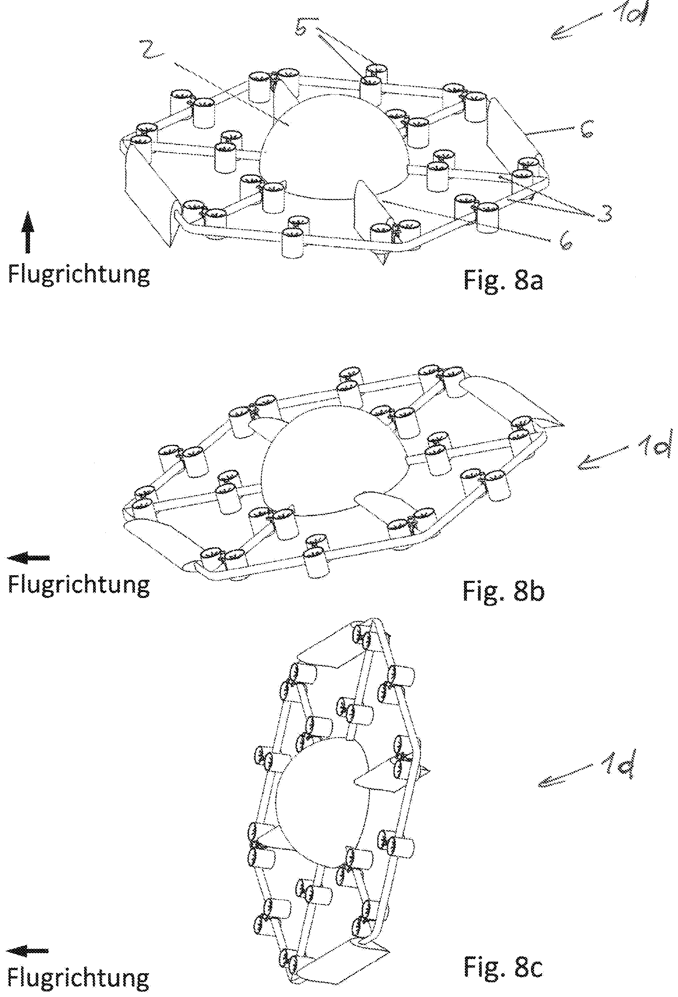

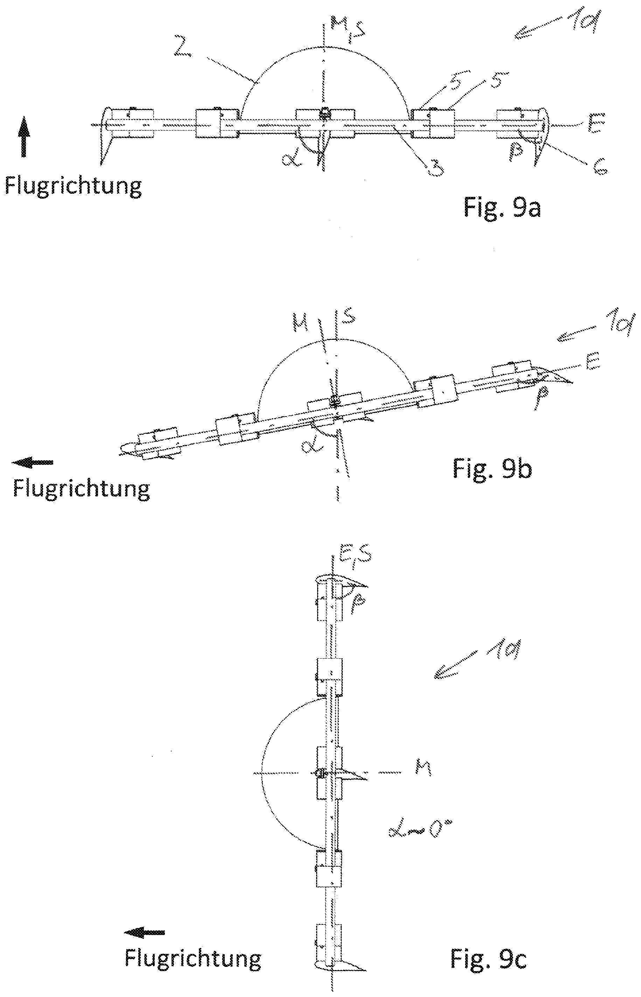

Die **Figuren 8a bis 8c** und **9a bis 9c** zeigen die Flugeinheit nach Fig. 1d in verschiedenen Flugphasen.

In den verschiedenen Flugphasen dieser Flugeinheit nach Fig. 1d werden die drehbeweglichen Flügel ebenfalls mit einem variabel einstellbaren Anstellwinkel $\beta$ einzeln oder gemeinsam angesteuert und entsprechend der Anforderungen an die jeweiligen Flugbedingungen individuell eingestellt, auch wenn hier der Einfluss der Flügel auf die Auftriebsleistung und Lenkung der Flugeinheit infolge der geringeren Anströmung der Flügel durch die Turbinen-Propeller geringer ist.

Der Anstellwinkel $\beta$ kann dennoch in Abhängigkeit des Neigungswinkels $\alpha$ der Flugeinheit nach Fig. 1d gegenüber der Schwerkraftlinie S der Flugeinheit eingestellt werden. Bzw. beeinflussen die Flügelstellungen in einem bestimmten Anstellwinkel $\beta$ und die Einstellung der Turbinen-Propeller der Antriebseinheiten dennoch die Neigung der Flugeinheit nach Fig. 1d und damit den Neigungswinkel $\alpha$.

Die **Figuren 8a, 9a** zeigen die Flugeinheit nach Fig. 1d in einer Steigflug-Phase (Lifting).

Die **Figuren 8b, 9b** zeigen die Flugeinheit nach Fig. 1d in einer Aufkipp-/ bzw. Abkipp-Phase.

Die **Figuren 8c, 9c** zeigen die Flugeinheit nach Fig. 1d in einer Vorwärtsflug-Phase.

Die Vorgänge und Einstellungen bezüglich der Flugeinheit 1d in den verschiedenen Flugphasen sind mit den vorstehend beschriebenen Vorgängen und Einstellungen zur Flugeinheit nach Fig. 1a in den verschiedenen Flugphasen vergleichbar, so dass bezüglich der Beschreibung der Flugeinheit auf die Ausführungen zu den Figuren **2a bis 2c** und **3a bis 3c** verwiesen wird.

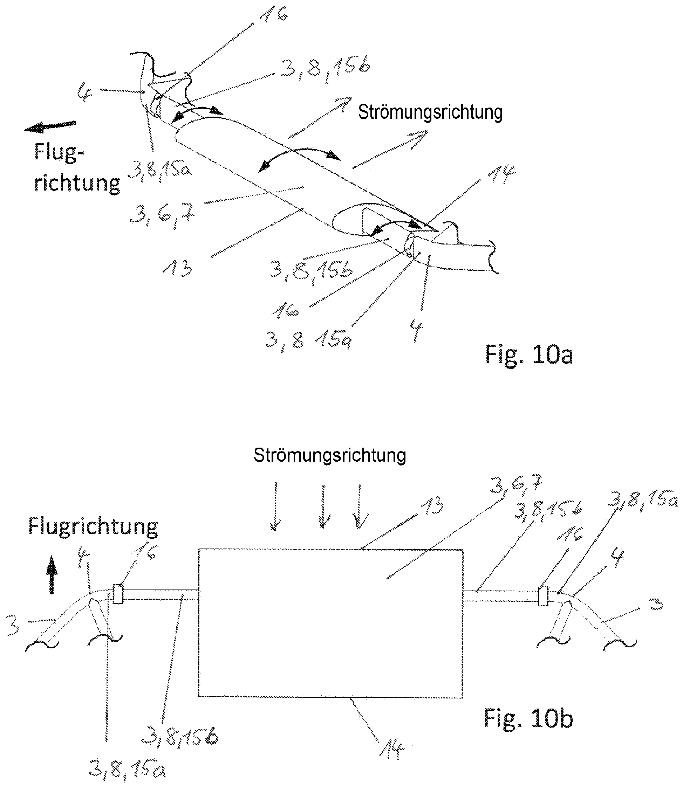

Die **Figuren 10a, b** zeigen einen Ausschnitt eines Tragwerkbalkens mit einem daran angeordneten Flügel im Detail.

Der Tragwerksbalken erstreckt sich zwischen zwei Knotenpunkten der Tragwerksstruktur und weist einen Flügel-Abschnitt und zwei den Flügel-Abschnitt beidseitig einfassende Träger-Abschnitte auf.

Der Flügel-Abschnitt und die beiden Träger-Abschnitte übernehmen gemeinsam die Tragfunktion des betreffenden Tragwerkbalkens innerhalb der Tragwerksstruktur.

Im Flügel-Abschnitt ist der Tragwerksbalken als erfindungsgemäßer Flügel mit einer Tragflächenform (Tragfläche) ausgebildet. Der Querschnitt des Flügels ist damit deutlich größer als der Querschnitt des zugehörigen Tragwerkbalkens, der den Flügel aufweist, ausgebildet.

Der ausgebildete Flügel hat in Strömungsrichtung vorderseitig eine abgerundete Anströmkante zur Anströmung des Flügels und in Strömungsrichtung rückseitig eine spitz zulaufende Abströmkante zur Abströmung des Luftstromes vom Flügel.

Der Flügel-Abschnitt ist mit den sich beidseitig anschließenden Träger-Abschnitten fest verbunden.

Die beidseitigen Träger-Abschnitte sind unterteilt in jeweils einen längeren drehbeweglichen Teil des Träger-Abschnitts, der unmittelbar an den Flügel-Abschnitt anschließt und mit diesem fest verbunden ist, und jeweils einen kürzeren feststehenden Teil des Träger-Abschnitts, der in leicht gekrümmter Form fest an den jeweiligen Knotenpunkt des Tragwerksbalkens anschließt.

Der drehbewegliche Teil und der feststehende Teil des jeweiligen Träger-Abschnitts sind mittels eines Drehlagers miteinander verbunden.

Somit kann der im Flügel-Abschnitt des Tragwerksbalkens ausgebildete Flügel gemeinsam mit den unmittelbar angefügten drehbeweglichen Teilen des Träger-Abschnitts mittels der beiden Drehlager gegenüber den feststehenden Träger-Abschnitten des Tragwerksbalkens um dessen Längsachse geschwenkt werden, wobei die drehbeweglichen Teile des Träger-Abschnitts als zwei den Flügel stützende und führende Drehwellen fungieren.

Die durch die Anströmung des Flügels entstehende Biegelast vollführt in den mit dem Flügel verbundenen, drehbeweglichen Teilen der Träger-Abschnitte eine geringfügige Winkeländerung gegenüber den feststehenden Teilen des jeweiligen Träger-Abschnitts, die durch beispielsweise eine Verwendung von Tonnenrollenlagern, die eine gewisse Winkelstellung der Lagerelemente zueinander zulassen, leicht kompensiert werden kann.

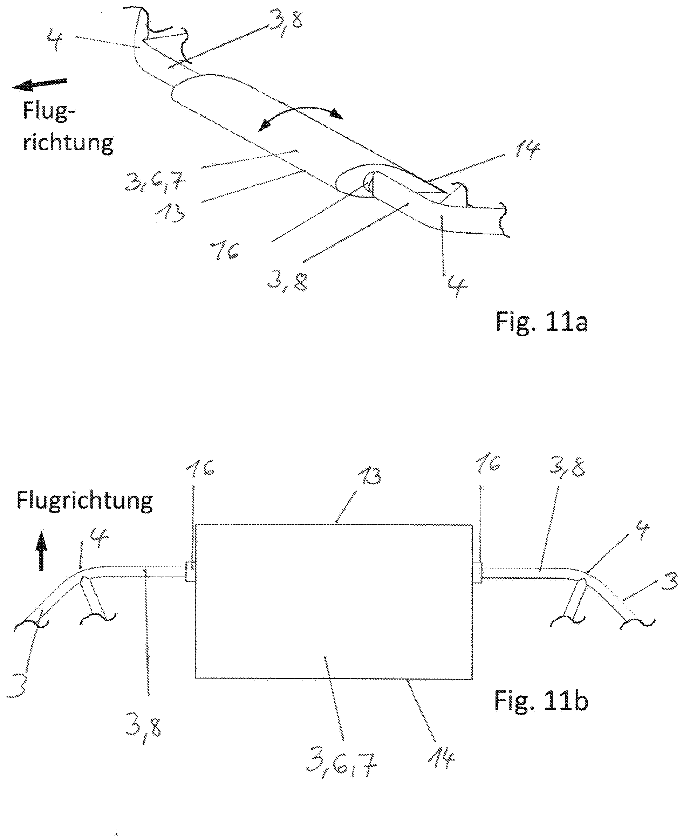

Die **Figuren 11a, 11b** zeigen einen Ausschnitt eines Tragwerkbalkens in alternativer Ausführung mit einem daran ausgebildeten Flügel im Detail.

Der Tragwerksbalken erstreckt sich analog zu der Ausführung nach Fig. 10a, b zwischen zwei Knotenpunkten der Tragwerksstruktur und weist einen Flügel-Abschnitt und zwei den Flügel-Abschnitt beidseitig einfassendende Träger-Abschnitte auf.

Der Flügel-Abschnitt und die beiden Träger-Abschnitte übernehmen gemeinsam die Tragfunktion des betreffenden Tragwerkbalkens innerhalb der Tragwerksstruktur.

Der Flügel im Flügel-Abschnitt ist mit einer Tragflächenform (Tragfläche) analog dem Flügel nach Fig. 10a, b ausgebildet.

Der Flügel-Abschnitt bzw. der daran ausgebildete Flügel ist mit den sich beidseitig anschließenden, feststehenden Träger-Abschnitten des Tragwerkbalkens mittels zweier Drehlager verbunden.

Die Drehlager können beidseitig des Flügels bündig an dem Flügel angeordnet sein oder teilweise oder ganz in den Flügel integriert ausgebildet sein.

Somit kann nach diesem Ausführungsbeispiel der im Flügel-Abschnitt des Tragwerksbalkens ausgebildete Flügel mittels der beiden Drehlager gegenüber den feststehenden Träger-Abschnitten des Tragwerksbalkens um deren Längsachse geschwenkt werden.

Die infolge der Anströmung des Flügels wirkende Biegelast auf die feststehenden Träger-Abschnitte vollführt eine geringfügige Winkeländerung des jeweiligen feststehenden Träger-Abschnitts gegenüber dem Flügel, die hier ebenfalls durch beispielsweise eine Verwendung von Tonnenrollenlagern, die eine gewisse Winkelstellung der Lagerelemente zueinander zulassen, leicht kompensiert werden kann.

Dies Ausführung erzeugt zwar eine höhere Biegebelastung der feststehenden Träger-Abschnitte gegenüber der Ausführung nach Fig. 10a, b, schafft jedoch eine in allen Fluglagen der Flugeinheit stabilere Lagerung des Flügels. Darüber hinaus bietet die Ausführung eine konstruktiv einfachere Ausführung der Verstellmöglichkeit des Flügels gegenüber dem Tragwerksbalken und eine günstigere Austauschbarkeit der Flügel zur Anpassung an einsatzspezifische Flügelprofile.

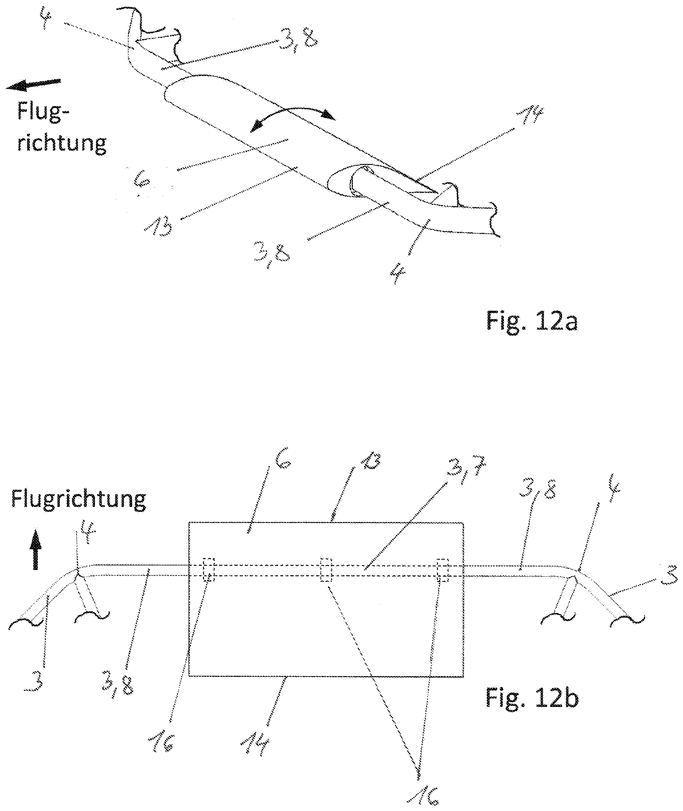

Die **Figuren 12a, 12b** zeigen einen Ausschnitt eines Tragwerkbalkens in weiterer alternativer Ausführung mit einem daran angeordneten Flügel im Detail.

Der Tragwerksbalken erstreckt sich analog zu der Ausführung nach Fig. 10a, b und 11a, b zwischen zwei Knotenpunkten der Tragwerksstruktur und weist einen Flügel-Abschnitt und zwei den Flügel-Abschnitt beidseitig einfassendende Träger-Abschnitte auf.

Der Tragwerksbalken weist in dieser Ausführungsform sowohl im Flügel-Abschnitt als auch in den beiden Träger-Abschnitten einen durchgehend gleichgroßen Balkenquerschnitt auf, so dass dieser, wie jeder andere Tragwerksbalken der Tragwerksstruktur ausgebildet und die ebensolche Tragfunktion innerhalb der Tragwerksstruktur übernimmt.

Der Flügel im Flügel-Abschnitt ist mit einer Tragflächenform (Tragfläche) analog dem Flügel nach Fig. 10a, b, 11a, b ausgebildet, wobei der Flügel nach diesem Ausführungsbeispiel den Tragwerkbalken im Bereich des Flügel-Abschnitts, an dem der Flügel angeordnet ist, hohl umschließt.

Der Flügel ist mit dem Flügel-Abschnitt des Tragwerkbalkens mittels dreier Drehlager, die im Flügel-Abschnitt angeordnet sind, verbunden.

Somit kann nach diesem Ausführungsbeispiel der im Flügel-Abschnitt des Tragwerksbalkens ausgebildete Flügel mittels der drei Drehlager gegenüber den gesamten feststehenden Tragwerksbalken um dessen Längsachse geschwenkt werden, wobei der Tragwerksbalken als eine den drehbaren Flügel stützende und lagernde Drehachse fungiert.

Die infolge der Anströmung des Flügels wirkende Biegelast auf Tragwerksbalken wird bei diesem Ausführungsbeispiel weitestgehend gleichmäßig über den durchgehend gleichmäßig ausgebildeten Tragwerkbalkens verteilt, so dass eine nur geringe Durchbiegung des Tragwerksbalkens zu erwarten ist und die verteilt angeordneten Drehlager im Wesentlichen keine Winkeländerungen erfahren.

Die Ausführung verbessert die Stabilität der Tragwerksstruktur und die Flugeigenschaften weiter und gestattet zudem die Verwendung von konstruktiv einfacheren Drehlager, wie Kugellager oder Gleitlager.

Bezugszeichenliste

| | |
|---|---|
| 1 | Flugeinheit a, b, c, d |
| 2 | Zentraleinheit |
| 3 | Tragwerksbalken |
| 4 | Knotenpunkt der Tragwerksstruktur |
| 5 | Antriebseinheit |
| 6 | Flügel |
| 7 | Längenabschnitt des Tragwerksbalkens, Flügel-Abschnitt |
| 8 | Längenabschnitt des Tragwerksbalkens, Träger-Abschnitt |
| 9 | Propeller |
| 10 | Turbinen-Propeller |
| 11 | Fluggerät |
| 12 | Transporteinheit |
| 13 | Anströmkante des Flügels |
| 14 | Abströmkante des Flügels |
| 15 | Teil des Träger-Abschnitts a-feststehend, b-drehbar |
| 16 | Drehlager |

| | |
|---|---|
| M | Mittelachse der Flugeinheit |
| E | Ebene der Tragwerksstruktur |
| S | Schwerkraftlinie |
| L | Längsachse der Transporteinheit |

| | |
|---|---|
| $\alpha$ | Neigungswinkel |
| $\beta$ | Anstellwinkel |

**Patentansprüche**

1. Flugeinheit (1a, 1b, 1c, 1d) für ein senkrecht startendes und landendes Fluggerät, mit mehreren, an einer Tragwerksstruktur angeordneten Antriebseinheiten (5,9,10) wobei die Tragwerksstruktur an Knotenpunkten (4) miteinander verbundene, längserstreckte Tragwerksbalken (3) aufweist, von denen eine bestimmte Anzahl jeweils mindestens einen Flügel (6) mit einer Tragflächenform aufweist, welcher in einem Längenabschnitt (7,8) eines zwischen zwei Knotenpunkten längserstreckten Tragwerkbalkens drehbeweglich angeordnet oder ausgebildet ist, wobei die Flugeinheit mit einer Transporteinheit (12) des Fluggerätes koppelbar ausgebildet ist.

2. Flugeinheit nach Anspruch 1, **dadurch gekennzeichnet, dass** der Flügel um eine Längsachse des Tragwerksbalkens drehbeweglich angeordnet oder ausgebildet ist.

3. Flugeinheit nach Anspruch 1 oder 2, **dadurch gekennzeichnet, dass** der Flügel den Flügel-Abschnitt (7) des Tragwerksbalkens umschließend angeordnet oder ausgebildet ist.

4. Flugeinheit nach einem der vorstehenden Ansprüche, **dadurch gekennzeichnet, dass** der Flügel drehbar gegenüber einem Träger-Abschnitt (8) des Tragwerkbalkens angeordnet oder ausgebildet ist.

5. Flugeinheit nach einem der vorstehenden Ansprüche, **dadurch gekennzeichnet, dass** ein Träger-Abschnitt drehbar gegenüber einem anderen Träger-Abschnitt desselben Tragwerkbalkens und /oder gegenüber einem dem Tragwerksbalken zugehörigen Knotenpunkt der Tragwerksstruktur angeordnet oder ausgebildet ist/sind.

6. Flugeinheit nach einem der vorstehenden Ansprüche, **dadurch gekennzeichnet, dass** der Flügel drehbar gegenüber dem Flügel-Abschnitt (7) angeordnet oder ausgebildet ist.

7. Flugeinheit nach einem der vorstehenden Ansprüche, **dadurch gekennzeichnet, dass** ein Anstellwinkel $\beta$ des /der Flügel(s) in einem Winkelbereich von 0° bis 270° verstellbar ausgebildet ist.

8. Flugeinheit nach einem der vorstehenden Ansprüche, **dadurch gekennzeichnet, dass** die Verstellung der Flügel einzeln und/oder gruppiert steuerbar ausgebildet ist.

9. Flugeinheit nach einem der vorstehenden Ansprüche, **dadurch gekennzeichnet, dass** wenigsten eine Anzahl an Antriebseinheiten zumindest einen Turbinen-Propeller - Impeller - (10) aufweisen.

**Claims**

1. Flight unit (1a,1b,1c,1d) for a vertical take-off and landing aircraft with several drive units (5,9,10) arranged on a wing assembly, where the wing assembly has, interconnected at node points (4), longitudinally extended wing assembly struts (3) of which a defined number each has at least one aerofoil-shaped wing (6) that is arranged or designed to be rotatable in a longitudinal section (7,8) of a longitudinally extended wing assembly strut between two node points, where the flight unit is designed to be connectable to a transport unit (12) of the aircraft.

2. Flight unit in accordance with Claim 1, **characterised in that** the wing is arranged or designed to be rotatable around a longitudinal axis of the wing assembly strut.

3. Flight unit in accordance with Claim 1 or 2, **characterised in that** the wing is arranged or designed to enclose the wing section (7) of the wing assembly strut.

4. Flight unit in accordance with one of the preceding claims, **characterised in that** the wing is arranged or designed to be rotatable relative to a support section (8) of the wing assembly strut.

5. Flight unit in accordance with one of the preceding claims, **characterised in that** a support section is arranged or designed to be rotatable relative to another support section of the same wing assembly strut and/or relative to a node point of the wing assembly associated with the wing assembly strut.

6. Flight unit in accordance with one of the preceding claims, **characterised in that** the wing is arranged or designed to be rotatable relative to the wing section (7).

7. Flight unit in accordance with one of the preceding claims, **characterised in that** an angle of incidence β of the wing(s) is designed to be adjustable across an angle range of 0° to 270°.

8. Flight unit in accordance with one of the preceding claims, **characterised in that** the adjustment of the wings is designed to be controllable individually and/or in groups.

9. Flight unit in accordance with one of the preceding claims, **characterised in that** at least a number of drive units have at least one turbine propeller - impeller - (10).

**Revendications**

1. Unité de vol (1a, 1b, 1c, 1d) pour un aéronef à décollage et atterrissage verticaux, comprenant plusieurs unités d'entraînement (5, 9, 10) disposées contre une structure porteuse, sachant que la structure porteuse présente en des points nodaux (4) des traverses de structure porteuse (3) s'étendant longitudinalement et reliées entre elles, dont un nombre déterminé présente respectivement au moins une aile (6) en forme de surface portante, aile qui est disposée ou configurée mobile en rotation dans un tronçon longitudinal (7, 8) d'une traverse de structure porteuse s'étendant longitudinalement entre deux points nodaux, sachant que l'unité de vol est configurée couplable avec une unité de transport (12) de l'aéronef.

2. Unité de vol selon la revendication 1, **caractérisée en ce que** l'aile est disposée ou configurée mobile en rotation autour d'un axe longitudinal de la traverse de structure porteuse.

3. Unité de vol selon la revendication 1 ou 2, **caractérisée en ce que** l'aile est disposée ou configurée de façon à entourer le segment ailé (7) de la traverse de structure porteuse.

4. Unité de vol selon l'une des revendications précédentes, **caractérisée en ce que** l'aile est disposée ou configurée de façon à pouvoir tourner par rapport à un segment support (8) de la traverse de structure porteuse.

5. Unité de vol selon l'une des revendications précédentes, **caractérisée en ce qu'**un segment support est disposé ou configuré de façon à pouvoir tourner par rapport à un autre segment support de la même traverse de structure porteuse, et/ou par rapport à un point nodal - de la structure porteuse - appartenant à la traverse de structure porteuse.

6. Unité de vol selon l'une des revendications précédentes, **caractérisée en ce que** l'aile est disposée ou configurée de façon à pouvoir tourner par rapport au segment ailé (7).

7. Unité de vol selon l'une des revendications précédentes, **caractérisée en ce qu'**un angle d'incidence β de l'aile / des ailes est configuré ajustable sur une plage angulaire comprise entre 0° et 270°.

8. Unité de vol selon l'une des revendications précédentes, **caractérisée en ce que** l'ajustement des ailes est configuré pilotable de façon individuelle et/ou groupée.

9. Unité de vol selon l'une des revendications précédentes, **caractérisée en ce qu'**au moins un nombre d'unités d'entraînement présentent au moins un rotor (10) à hélice turbine.

Fig. 1a

Fig. 1b

Fig. 1c

1d

3,8
5,10
3,6,7
3,8
4
2

4
5,10
5,10
3
4
3,8
3,6,7
3,8
4

M

Flugrichtung

Fig. 1d

- vergrößert -

Flugrichtung

Fig. 2a

Flugrichtung

Fig. 2b

Flugrichtung

Fig. 2c

Flugrichtung

Fig. 3a

Flugrichtung

Fig. 3b

Flugrichtung

Fig. 3c

Flugrichtung

Fig. 4a

Flugrichtung

Fig. 4b

Flugrichtung

Fig. 4c

2

M, S, L

16

3

α

E

6

**Flugrichtung**

11

7

12

**Fig. 5a**

M

S, L

E

α

**Flugrichtung**

**Fig. 5b**

E

M

α 45°

S

L

**Flugrichtung**

**Fig. 5c**

Flugrichtung

Fig. 6a

Flugrichtung

Fig. 6b

Flugrichtung

Fig. 6c

Flugrichtung

Fig. 7a

Flugrichtung

Fig. 7b

Flugrichtung

Fig. 7c

Flugrichtung

Fig. 8a

Flugrichtung

Fig. 8b

Flugrichtung

Fig. 8c

Flugrichtung

Fig. 9a

Flugrichtung

Fig. 9b

Flugrichtung

Fig. 9c

16

3, 8, 15b

4

7 Strömungsrichtung

3, 8, 15a

Flugrichtung

3, 6, 7

14

13

3, 8, 15b

16

3, 8, 15a

4

Fig. 10a

Strömungsrichtung

3, 6, 7

3, 8, 15b

3, 8, 15a

Flugrichtung

4

16

16

4

3

13

3

14

3, 8, 15b

3, 8, 15a

Fig. 10b

Flugrichtung

4

3,8

3,6,7

13

16

3,8

14

4

Fig. 11a

Flugrichtung

16

13

16

3,8

4

4

3

3

3,8

3,6,7

14

Fig. 11b

Fig. 12a

Fig. 12b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019114885 A1
- US 2020086986 A1